# EUROPÄISCHE PATENTSCHRIFT

(11) **EP 2 784 006 B1**
(45) Veröffentlichungstag und Bekanntmachung des Hinweises auf die Patenterteilung: **03.08.2016**
(21) Anmeldenummer: 14165735.3
(22) Anmeldetag: 31.03.2011
(51) Int. Cl.: B65G 1/137

(54) **Kommissioniersystem**
Picking system
Système de préparation de commandes

(30) Priorität: 02.04.2010 AT 5402010; 19.04.2010 AT 25710 U
(43) Veröffentlichungstag der Anmeldung: 01.10.2014
(62) Teilanmeldung aus: 11724117.4
(73) Patentinhaber: TGW Mechanics GmbH, 4600 Wels (AT)
(72) Erfinder: Wolkerstorfer, Christoph, 4600 Wels (AT); Reischl, Josef, 4623 Gunskirchen (AT)
(74) Vertreter: Burger, Hannes

(56) Entgegenhaltungen:
- EP-A1- 2 050 695

## Beschreibung

Die Erfindung betrifft ein Kommissioniersystem mit einer Kommissionierstation zum Kommissionieren von Gegenständen aus Lagerbehältern in Auftragsbehälter durch eine Kommissionierperson, einer ersten Förderbahn zum Transport von Lagerbehältern, einer zweiten Förderbahn zumindest zum Transport von Auftragsbehältern und/oder Lagerbehältern, wobei die Kommissionierstation an die erste Förderbahn zum Transport von Lagerbehältern und an die zweite Förderbahn zumindest zum Transport von Auftragsbehältern und/oder Lagerbehältern angeschlossen ist und ein zwischen einem ersten Niveau und einem zweiten Niveau verfahrbares Lastaufnahmemittel aufweist, wobei von einem ersten Niveau ein Lagerbehälter vom Lastaufnahmemittel von der ersten Förderbahn übernommen wird und auf dem zweiten Niveau in einer Bereitstellungsposition für die Kommissionierperson angedient wird.

Zur Erhöhung der Leistung von Kommissioniersystemen werden zunehmend auch sogenannte "Ware-zum-Mann"-Kommissioniersysteme realisiert, bei denen Lagerbehälter mit zu kommissionierenden Artikeln oder Gegenständen zu einer Kommissionierstation gefördert werden und an dieser durch die Kommissionierperson Gegenstände aus den Lagerbehältern entnommen und auftragsgemäß in sogenannte Auftragsbehälter verbracht werden. Dadurch kann die sogenannte Pickleistung einer Kommissionierperson erhöht werden, da deren Wege zum Sammeln der benötigten Gegenstände minimiert werden und dadurch mehr Pickvorgänge pro Zeiteinheit durchgeführt werden können. Bei derartigen Kommissioniersystemen ist eine Kommissionierstation oder ein Kommissionierplatz über eine Fördertechnik mit dem Lager für die Lagerbehälter verbunden und werden diese automatisch zu den Kommissionierstationen gefördert.

Im Rahmen dieser Erfindung wird unter einem Behälter nicht nur ein Behältnis für einen oder mehrere Gegenstände verstanden, sondern auch alle sonstigen Mittel, mit denen ein oder mehrere Gegenstände zu einer Lagereinheit oder einer Transporteinheit zusammengefasst werden können, wie beispielsweise auch Paletten usw.

Unter Lagerbehältern wird ein Behälter verstanden, in dem ein oder mehrere Gegenstände für eine spätere Kommissionierung in einem Lager bereitgehalten werden können und aus dem während eines Kommissioniervorganges ein oder mehrere oder alle Gegenstände entnommen werden.

Unter einem Auftragsbehälter werden Behälter verstanden, in die gemäß einem zu erfüllenden Kommissionierauftrag zum Beispiel gemäß einem Lieferauftrag aus einem oder verschiednen Lagerbehältern entnommene Gegenstände eingefüllt werden und diese Auftragsbehälter anschließend auftragsgemäß weiterbearbeitet werden, zum Beispiel an einen bestimmten Kunden ausgeliefert werden.

An einer derartigen Kommissionierstation werden im Arbeitsbereich einer Kommissionierperson im Allgemeinen mehrere Auftragsbehälter in ergonomisch günstiger Entfernung und Position bereitgehalten und der Kommissionierperson weiters ebenfalls in ergonomisch günstiger Position nacheinander die verschiedenen Lagerbehälter mit den zu kommissionierenden Gegenständen bereitgestellt.

Die Fördertechnik derartiger Kommissioniersysteme umfasst dabei im Allgemeinen zumindest eine Förderbahn für die Versorgung der Kommissionierperson mit Lagerbehältern als auch eine Förderbahn für den Abtransport von fertiggestellten Auftragsbehältern.

Die WO 2011/103404 A1, welche unter Artikel 54(3) EPÜ fällt, offenbart eine Kommissionierstation zum Kommissionieren von Gegenständen aus Lagerbehältern in Auftragsbehälter durch eine Kommissionierperson, welche an die erste Förderbahn zum Transport von Lagerbehältern und an die zweite Förderbahn zumindest zum Transport von Auftragsbehältern und/oder Lagerbehältern angeschlossen ist und eine automatisierte erste Lagerbehälter-Transportvorrichtung (elevator assembly) zum Antransport von Lagerbehältern in eine Bereitstellungsposition und eine automatisierte zweite Lagerbehälter-Transportvorrichtung (extractor assembly) zum Abtransport von Lagerbehältern aus der Bereitstellungsposition umfasst. Die erste Lagerbehälter - Transportvorrichtung weist eine im Wesentlichen in vertikaler Richtung bewegbare erste Aufnahmeeinheit für einen Lagerbehälter und die zweite Lagerbehälter -Transportvorrichtung eine im Wesentlichen in horizontaler Richtung bewegbare zweite Aufnahmeeinheit für einen Lagerbehälter auf. Die erste Lagerbehälter-Transportvorrichtung und zweite Lagerbehälter-Transportvorrichtung sind baulich getrennte Baueinheiten. Ein Kommissioniersystem ist auch aus der EP 1 572 558 B1 bekannt. Diese beschreibt einen Kommissionierplatz zum Kommissionieren von Artikeln aus Lagerbehältern durch eine Kommissionierperson, wobei der Kommissionierplatz an eine Fördertechnik, die eine durch einen Arbeitsbereich der Kommissionierperson hindurchführende Förderbahn aufweist, zumindest zum Antransport von Lagerbehältern angeschlossen ist. Um ein ergonomisch günstiges Andienen der Lagerbehälter für die Kommissionierperson zu bewirken, ist dabei die Förderbahn zumindest im Arbeitsbereich der Kommissionierperson um ihre Längsachse in Richtung der Kommissionierperson gekippt. Der Kommissionierperson wird dadurch die Öffnung eines Lagerbehälters ergonomisch günstig angeboten, wodurch einerseits eine optische Erfassung der zu entnehmenden Artikel erleichtert wird und darüber hinaus auch das Entnehmen der Gegenstände für die vor dem Lagerbehälter stehende Kommissionierperson wesentlich erleichtert wird.

Dieser Vorteil der ergonomisch günstigen Andienung von Lagerbehältern durch das Ankippen im Nahbereich der Kommissionierperson bewirkt jedoch eine zusätzliche Lärmbelastung für die Kommissionierperson sowie eine erhöhte Gefahr von Quetschungen durch bewegte Anlagenteile bzw. Lagerbehälter.

Aus EP 2 050 695 A1 ist ein gattungsgemäßes Kommissioniersystem bekannt, bei dem Lagerbehälter an einer ersten Förderbahn angefördert und von dieser in einer ersten Position mittels eines Lastaufnahmemittels auf ein höheres Niveau angehoben werden, in dem sich die Lagerbehälter in einer Bereitstellungsposition für die Kommissionierperson befinden. Die Lagerbehälter werden dabei in der Bereitstellungsposition auf einem weiterem Förderer abgelegt, mit dem sie nach Beendigung des Kommissioniervorganges von der Kommissionierperson weg etwa in horizontaler Richtung abgefördert werden und in Folge in einer zweiten Position auf eine weitere Förderbahn für Lagerbehälter abgesenkt werden. Dadurch, dass der Lagerbehälter im Nahbereich der Kommissionierperson zwischen unterschiedlichen Förderern zu übergeben ist, entstehen zusätzliche Lärmemissionen und durch die erforderlichen Verstellbewegungen der Förderer zueinander zusätzliche Quetschgefahren.

Das Dokument US 4,909,697 A offenbart einen Arbeitsplatz an einem Kommissioniersystem mit einem verstellbaren Arbeitstisch mit dem Behälter in horizontaler Richtung zu einer Kommissionierperson angefördert, dieser bereitgestellt und anschließend wieder in horizontaler Richtung abgefördert werden können. Der Arbeitstisch nimmt dazu nacheinander eine höher gelegene Aufnahmeposition, eine Arbeitsposition und eine tiefer gelegene Abgabeposition ein. In der Arbeitsposition kann der Arbeitstisch zur Kommissionierperson hingeneigt sein. Zum Aufnehmen oder Abgeben von Behältern befindet sich der Arbeitstisch in horizontaler Lage, während er in der Arbeitsposition zur Kommissionierperson hin geneigt sein kann. Weiters kann die Kommissionierperson die Arbeitshöhe des geneigten Arbeitstisches einstellen, wodurch Gegenstände möglichst schnell und einfach gehandhabt werden können. Das Neigen und Verstellen der Höhe des Arbeitstisches mit dem Behälter erfolgt dabei unmittelbar vor der Kommissionierperson.

Die EP 2 098 464 A1 offenbart ein Kommissioniersystem mit einer Kommissionierstation zum Kommissionieren von Gegenständen aus Lagerbehältern in Auftragsbehälter durch eine Kommissionierperson, einer ersten Förderbahn zum Transport von Lagerbehältern, einer zweiten Förderbahn zumindest zum Transport von Auftragsbehältern und/oder Lagerbehältern. Die erste Förderbahn und zweite Förderbahn sind übereinander angeordnet und verlaufen parallel zueinander. Die Kommissionierstation umfasst eine oder mehrere Lagerbehälter-Umlauffördervorrichtungen und mehrere Auftragsbehälter-Umlauffördervorrichtungen, welche jeweils sowohl an die erste Förderbahn als auch zweite Förderbahn angeschlossen sind. Dabei verlaufen die Umlauffördervorrichtungen senkrecht zur ersten/zweiten Förderbahn. Die Auftragsbehälter-Umlauffördervorrichtungen sind jeweils derart eingerichtet, dass von ihr mehrere Auftragsbehälter entlang eines Auftragsbehälter-Förderkreises umlaufend wiederholt der Kommissionierperson zugeführt werden, bis der jeweilige Auftragsbehälter entsprechend einem Kommissionierauftrag mit Gegenständen aus einem oder mehreren Lagerbehältern kommissioniert ist.

Schließlich offenbart die US 5,246,332 A eine Kommissionierstation zum Kommissionieren von Gegenständen aus Lagerbehältern, in Auftragsbehälter durch eine Kommissionierperson, welche an eine Stirnseite einer oberen Förderbahn zum Antransport von Lagerbehältern und an eine Stirnseite einer unteren Förderbahn zum Abtransport von Lagerbehältern angeschlossen ist und ein zwischen einem ersten Niveau und einem zweiten Niveau höhenverstellbares Lastaufnahmemittel (Hubplattform) aufweist, welches mit einer Fördervorrichtung ausgestattet ist und der Bereitstellung eines Lagerbehälters in einer Bereitstellungsposition dient. Hierzu wird das Lastaufnahmemittel zwischen dem ersten Niveau und zweiten Niveau in eine Höhenposition bewegt, in welcher sich der Lagerbehälter in der Bereitstellungsposition befindet und der Lagerbehälter einer Kommissionierperson angedient wird. Nach einem Kommissioniervorgang wird das Lastaufnahmemittel auf das Niveau der unteren Förderbahn abgesenkt und der Lagerbehälter vom Lastaufnahmemittel auf die untere Förderbahn abgefördert. Somit sind für einen LagerbehälterBereitstellvorgang vorerst eine (obere) Horizontalbewegung, eine Vertikalbewegung vom ersten (oberen) Niveau bis in die Bereitstellungsposition, eine Vertikalbewegung von der Bereitstellungsposition bis zum zweiten (unteren) Niveau und danach eine (untere) Horizontalbewegung notwendig.

Die Aufgabe der Erfindung besteht darin, ein Kommissioniersystem mit einer Kommissionierstation bereit zu stellen, bei dem die Arbeitsbelastung für eine Kommissionierperson weiter verringert und dadurch die Leistung weiter erhöht werden kann.

Die Aufgabe der Erfindung wird durch den Gegenstand des Anspruchs 1 gelöst. Die Aufnahmefläche bzw. die Fördervorrichtung dient der Unterstützung eines Lagerbehälters beim Anheben von der ersten Förderbahn, dem Bereitstellen eines Lagerbehälters für die Kommissionierperson und nach einem Kommissioniervorgang auch dem Weiterfördern direkt zur zweiten Förderbahn. Der abgefertigte Lagerbehälter kann ausgehend von der Bereitstellungsposition und ohne Umsetzen auf eine weitere Fördervorrichtung direkt an die zweite Förderbahn übergeben werden. Dadurch können die mit dem Umsetzvorgang eines Lagerbehälters einhergehenden Lärmemissionen reduziert werden. Grundsätzlich ist es auch möglich, dass der Lagerbehälter von der Bereitstellungsposition wieder zurück auf die erste Förderbahn bewegt und an diese übergeben wird.

Eine vorteilhafte Weiterbildung dieser Kommissionierstation besteht darin, dass das Lastaufnahmemittel zumindest ein endlos umlaufendes Förderorgan umfasst, mit dem ein am Lastaufnahmemittel aufgenommener Lagerbehälter in einer von der Verstellrichtung des Lastaufnahmemittels verschiedenen Fördenichtung bewegbar ist. Dadurch wird ebenfalls ermöglicht, dass der Lagerbehälter mit ein und demselben Lastaufnahmemittel von der ersten Förderbahn aufgenommen und im Anschluss an den Kommissioniervorgang in eine zur Hubbewegung unterschiedliche Förderrichtung weiterbewegt werden kann. Dadurch ist ein sehr flexibler Betrieb an der Kommissionierstation erreicht. Der Lagerbehälter kann entweder ausgehend von der Bereitstellungsposition wahlweise wieder zurück auf die erste Förderbahn abgesenkt oder alternativ direkt an die zweite Förderbahn übergeben werden.

Der Abtransport des Lagerbehälters aus der Bereitstellungsposition kann besonders lärmarm erfolgen, wenn die Aufnahmefläche am Lastaufnahmemittel durch ein endlos umlaufendes Förderorgan gebildet ist, wie beispielsweise Riemen oder Gurte oder auch ein Förderband.

Vorteilhaft ist es, wenn die Aufnahmefläche den Lagerbehälter zwischen dem ersten Niveau und dem zweiten Niveau in einer um einen Winkel zur Kommissionierperson hin geneigten Lage stützt. Der Lagerbehälter kann bereits bei der Bewegung zwischen dem ersten Niveau und dem zweiten Niveau in einer zur Kommissionierperson hin geneigten Lage gehalten werden, womit, die beim Kippvorgang entstehenden Lärmemissionen als auch durch den Kippvorgang mögliche Verletzungsgefahren nicht im Nahbereich der Kommissionierperson liegen und dadurch die Arbeitsbedingungen für die Kommissionierperson deutlich verbessert sind.

Durch die Übergabe der abgefertigten Lagerbehälter an die zweite Förderbahn, die auch für den Abtransport von fertig kommissionierten Auftragsbehältern eingesetzt werden kann, wird eine eigene Förderbahn für das Abtransportieren der Lagerbehälter aus dem Kömmissioniersystem eingespart, wodurch der bauliche Aufwand für ein derartiges System gering gehalten werden kann. Gleichzeitig ergibt die durch die Kommissionierstation hindurchführende und über diese hinausragende erste Förderbahn die Möglichkeit, die Kommissionierstation bei Bedarf in beide Richtungen zu versetzen oder bei entsprechender Länge der Förderbahnen eine zusätzliche Kommissionierstation anzuordnen.

Da die mit einer möglichen Lärmemission verbundene Kippbewegung des Lagerbehälters beim Aufnehmen durch das Lastaufnahmemittel von der ersten Förderbahn von der Kommissionierperson distanziert erfolgt, ist es vorteilhaft, wenn die gekippte Lage des Lagerbehälters beim Anheben in die Bereitstellungsposition nicht mehr verändert wird und das Lastaufnahmemittel dazu an einer Führung translatorisch zwischen dem ersten Niveau und dem zweiten Niveau verstellbar geführt ist. Im einfachsten Fall kann die Führung geradlinig sein, also durch eine Linearführung gebildet sein, es ist jedoch auch denkbar, die translatorische Bewegung des Lagerbehälters durch eine sonstige Verstellkinematik mit der eine translatorische
oder geradlinige Bewegung des Lagerbehälters bewirkt werden kann, beispielsweise mit Hubarmen, die Bestandteile eines Koppelgetriebes sind.

Zur Vergrößerung der Fußfreiheit für die Kommissionierperson kann weiters die Richtung der Hubbewegung von der vertikalen Richtung abweichen, wozu die Führung des Lastaufnahmemittels gegenüber der Vertikalen in Richtung zur Kommissionierperson geneigt erfolgt.
Der Neigungswinkel für die Führung beträgt vorzugsweise etwa 15°, kann jedoch auch innerhalb einer Grenze von 5° und 30° liegen.

Zum Schutz der Kommissionierperson vor möglichen Verletzungen durch die Verstellbewegung des Lagerbehälters in die Bereitstellungsposition ist es von Vorteil, wenn der Bewegungsraum eines mit dem Lastaufnahmemittel bewegten Lagerbehälters in Richtung zur Kommissionierperson mittels einer dritten Schachtwand begrenzt ist. Die dritte Schachtwand verhindert, dass Körperteile der Kommissionierperson in den erforderlichen Bewegungsraum des Lagerbehälters bzw. des Lastaufnahmemittels ragen und möglicherweise verletzt werden. Gleichzeitig kann die dritte Schachtwand eine zusätzliche Absicherung des Lagerbehälters gegen Abrutschen vom Lastaufnahmemittel bewirken. Darüber hinaus wird in vorteilhafter Weise die Aufnahmefläche des Lastaufnahmemittels bis knapp unterhalb der Oberkante der Schachtwände verstellt und befindet sich somit der Lagerbehälter stets mit einem Teil seiner Höhe innerhalb des Schachtes. Aus der Sicht der Kommissionierperson wird dadurch ein Lagerbehälter innerhalb des Schachtes in die Bereitstellungsposition angehoben, daher auch wenn der Lagerbehälter in der Bereitstellungsposition angedient wird, und dadurch, dass die Unterkante des Lagerbehälters nicht aus diesem Schacht austritt, kann auch keine zusätzliche Quetschstelle entstehen. Der Lagerbehälter wird von den Schachtwänden auf zumindest drei Seiten umgeben, sodass Verletzungsgefahren vermieden werden. Der Schacht bildet am oberen Ende eine Austrittsöffnung für einen Lagerbehälter und am unteren Ende eine Eintrittsöffnung für einen Lagerbehälter aus, wobei die Austritts- und Eintrittsöffnung auf zumindest drei Seiten von den Schachtwänden begrenzt wird. In der Bereitstellungsposition kann der Lagerbehälter aus der Austrittsöffnung herausragen oder mit seiner Oberkante bündig mit den Schachtwänden abschließen.

Der Schacht bildet ferner auf der Innenseite mit seinen Schachtwänden Begrenzungsflächen für den Lagerbehälter aus. Befindet sich der Lagerbehälter in seiner Förderposition unterhalb des Schachtes und weicht der Lagerbehälter aus irgendwelchen Gründen von seiner zentrischen Position gegenüber dem Schacht ab, kann auf der Bewegung des Lagerbehälters vom ersten Niveau in Richtung des Schachtes durch einen trichterartigen Einlaufbereich im Bereich der Eintrittsöffnung und/oder durch die Schachtwände die Positionsabweichung des Lagerbehälters relativ zum Schacht begrenzt werden.

Wenn das Lastaufnahmemittel in Form einer Hubgabel ausgeführt wird, kann diese bei einer Förderbahn in Form eines Rollenförderers einfach zwischen die Rollen abgesenkt oder horizontal eingeführt werden und ein darauf positionierter Lagerbehälter angehoben werden. Dies ermöglicht eine einfache Bauart eines Bereitstellungsförderers mit dem ein Lagerbehälter von der ersten Förderbahn in die Bereitstellungsposition angehoben und gegebenenfalls anschließend wieder auf die erste Förderbahn abgesenkt werden kann.

Um die von der Kommissionierperson zurückzulegenden Wege kurz zu halten, ist von Vorteil, wenn benachbart zur Bereitstellungsposition, insbesondere beidseits dazu Stellplätze für die zu befüllenden Auftragsbehälter angeordnet sind und diese Stellplätze insbesondere um die Höhe der Auftragsbehälter niedriger gelegen sind, als die Oberkante eines Lagerbehälters in der Bereitstellungsposition. Die Oberkanten der Auftragsbehälter sind dadurch nicht höher positioniert als die Oberkante des Lagerbehälters und müssen die Gegenstände von der Kommissionierperson nicht zusätzlich angehoben werden, wodurch ebenfalls die Arbeitsbelastung geringer gehalten werden kann.

Damit fertig kommissionierte Auftragsbehälter mit geringer Belastung der Kommissionierperson an die zweite Förderbahn übergeben werden können, ist es von Vorteil, wenn für leichte Auftragsbehälter die Stellplätze als Gleitflächen ausgeführt sind, von denen die fertigen Auftragsbehälter einfach nach hinten abgeschoben werden oder wenn, im Fall von schweren Auftragsbehältern, beispielsweise in Form von Paletten, die Stellplätze selbst als Förderer ausgebildet sind oder durch solche an die zweite Förderbahn angeschlossen sind. Ein Fördervorgang mittels eines angetriebenen Förderers wird dann beispielsweise erst nach Freigabe durch die Kommissionierperson eingeleitet.

Das Fördern der Auftragsbehälter kann dabei manuell durch die Kommissionierperson oder motorisch erfolgen. Die Stellplätze können weiters leicht in Richtung zur Kommissionierperson geneigt werden, wodurch, ähnlich wie bei den Lagerbehältern in der Bereitstellungsposition eine ergonomisch günstige Andienung gegeben ist.

Zum Wechsel eines in der Bereitstellungsposition befindlichen Lagerbehälters muss dieser mittels des Lastaufnahmemittels abgesenkt und auf die erste Förderbahn übergeben werden, anschließend ein nachfolgender Lagerbehälter über das Lastaufnahmemittel positioniert und von diesem wieder in die Bereitstellungsposition angehoben werden. Damit die für diesen Austausch der Lagerbehälter erforderliche Zeit keine Wartezeit für die Kommissionierperson darstellt, ist es von Vorteil, wenn zumindest zwei voneinander unabhängige und mit eigenen Verstellantrieben versehene Lastaufnahmemittel vorgesehen sind. Dadurch können Lagerbehälter in zwei oder mehr nebeneinander angeordneten Bereitstellungspositionen angedient werden und ein Lagerbehälter gegen einen anderen ausgetauscht werden, während die Kommissionierperson aus einem danebenliegenden Lagerbehälter weiterkommissioniert.

Damit in der Bereitstellungsposition die Lagerbehälter möglichst nahe zur Kommissionierperson angedient werden können, ist es weiters von Vorteil, wenn die Führung bzw. Aufnahmefläche am Lastaufnahmemittel auf der von der Kommissionierperson abgewandten Seite angeordnet ist. Zusätzlich wird durch diese Anordnung der Führung auf der Hinterseite des Lastaufnahmemittels ein geringer Platzbedarf zur Seite erforderlich, wodurch benachbarte Bereitstellungspositionen oder benachbarte Auftragsbehälter in möglichst geringem Abstand angeordnet werden können, und dadurch die Wege für die Kommissionierperson möglichst kurz gehalten sind.

Das Kommissioniersystem kann neben der Kommissionierstation zumindest auch Abstellplätze für die Auftragsbehälter, ggf. Vorbereitungsplätze für Auftragsbehälter und die erste Förderbahn sowie die zweite Förderbahn umfassen.

Da bei derartigen Kommissioniersystemen die zweite Förderbahn zum Abfördern der fertigen Auftragsbehälter zumeist nicht den Kapazitätsengpass darstellt, ist es von Vorteil, wenn an der zweiten Förderbahn zwei oder mehrere Kommissionierstationen angeordnet werden, da dadurch Bauaufwand eingespart und auch eine raumsparende Anordnung der Kommissionierplätze möglich ist. Insbesondere können derartige Kommissionierstationen etwa spiegelsymmetrisch beidseitig der zweiten Förderbahn angeordnet sein.

Schließlich ist auch von Vorteil, wenn sich die erste Förderbahn und/oder die zweite Förderbahn durch die Kommissionierstation hindurch erstreckt und eine Länge der erste Förderbahn und/oder zweiten Förderbahn zumindest der doppelten Länge einer Kommissionierstation entspricht.

Zum besseren Verständnis der Erfindung wird diese anhand der nachfolgenden Figuren näher erläutert.

Es zeigen jeweils in stark schematisch vereinfachter Darstellung:
- Fig. 1: eine Ansicht eines Kommissioniersystems;
- Fig. 2: einen Schnitt durch ein Kommissioniersystem gemäß Fig. 1 im Bereich der Kommissionierstation mit einer nicht im Schutzumfang liegenden Ausführung eines Lastaufnahmemittels;
- Fig. 3: einen Schnitt durch ein Kommissioniersystem gemäß Fig. 1 im Bereich einer wahlweise verwendbaren Übergabestation;
- Fig. 4: einen Schnitt durch ein Kommissioniersystem gemäß Fig. 1 im Bereich der Auftragsbehälter;
- Fig. 5: eine Ansicht einer Ausführungsform des Lastaufnahmemittels für eine Kommissionierstation des erfindungsgemäßen Kommissioniersystems;
- Fig. 6: eine Prinzipskizze einer möglichen Ausführungsform eines Kommissioniersystems;
- Fig. 7: einen Schnitt durch eine Kommissionierstation in einer weiteren Ausführungsform, welche nicht im Schutzumfang der Erfindung liegt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

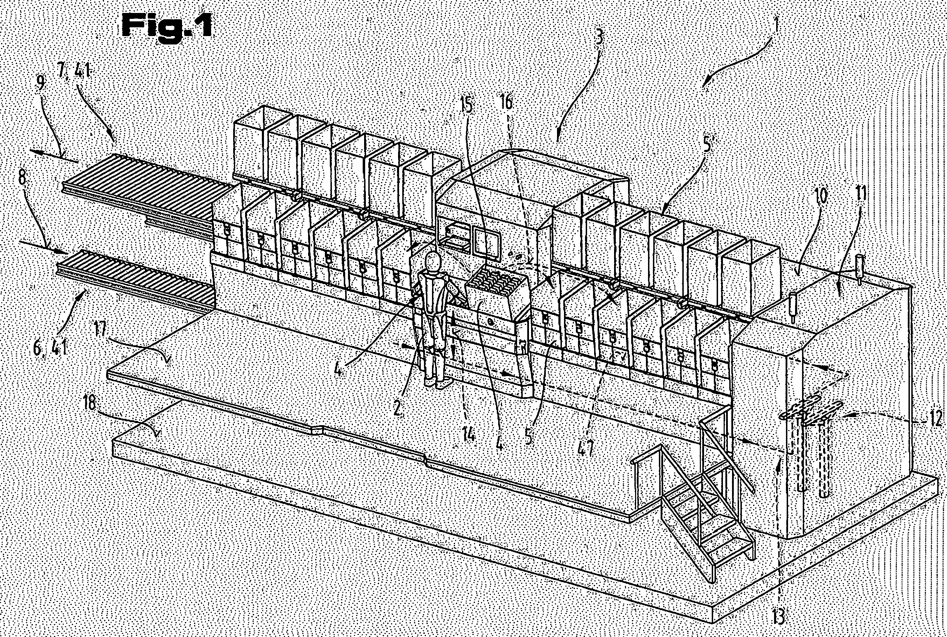

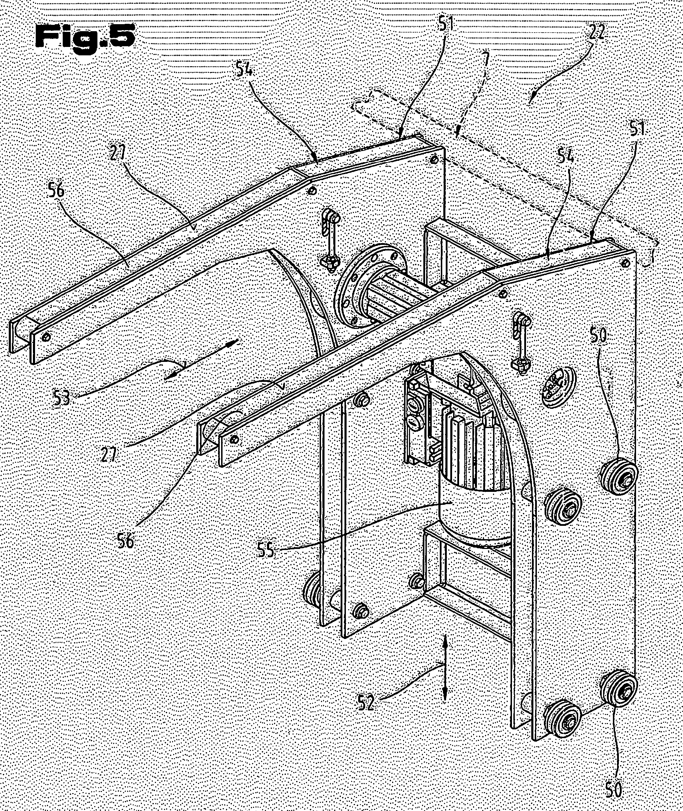

Auch sei darauf hingewiesen, dass im Nachfolgenden anhand der Fig. 1-4, 6 Ausführungen beschrieben werden, nach welchen ein Lagerbehälter nach einem Kommissioniervorgang aus der Bereitstellungsposition wieder zurück auf die erste Förderbahn abgesenkt und auf diese abgegeben wird. Diese Ausführungen benötigen eine Übergabestation zwischen der ersten Förderbahn und zweiten Förderbahn. Gemäß der Ausführung nach Fig. 5 kann ein Lagerbehälter nach einem Kommissioniervorgang aus der Bereitstellungsposition direkt an die zweite Förderbahn abgegeben werden. Es wäre bei der Ausführung nach Fig. 5 aber prinzipiell auch möglich, dass ein Lagerbehälter nach einem Kommissioniervorgang aus der Bereitstellungsposition wieder zurück auf die erste Förderbahn abgesenkt und auf diese abgegeben wird. Demnach erfordert die Ausführung gemäß Fig. 5 nicht zwingenderweise eine Übergabestation zwischen der ersten Förderbahn und zweiten Förderbahn. Aus diesem Grunde kann die Offenbarung zu den Fig. 1-4, 6 auch auf die Ausführung gemäß Fig. 5 übertragen werden.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Unter der Höhe eines Behälters wird, falls nichts anderes angegeben ist, die Höhe von der Aufstandsfläche bis zu der für die Entnahme aus einem Behälter oder die Befüllung in einen Behälter maßgebliche Oberkante verstanden.

Fig. 1 zeigt eine Ansicht eines Kommissioniersystems 1, an dem eine Kommissionierperson 2 Kommissionieraufträge bearbeiten kann. Das Kommissioniersystem 1 umfasst dabei eine Kommissionierstation 3, an der der Kommissionierperson 2 Lagerbehälter 4 mit zu kommissionierenden Artikeln oder Gegenständen bereitgestellt werden. Gemäß den vorliegenden Kommissionieraufträgen entnimmt die Kommissionierperson 2 einem bereitgestellten Lagerbehälter 4 die erforderlichen Gegenstände und kommissioniert diese in Auftragsbehälter 5, die benachbart zur Kommissionierstation 3 bereitstehen. Im dargestellten Ausführungsbeispiel sind beidseits der Kommissionierstation, also links und rechts davon, jeweils sechs Auftragsbehälter 5 bereitgestellt. Die Lagerbehälter 4 sind beispielsweise durch Kisten oder Paletten oder ähnliche Transport- und Lagerhilfsmittel gebildet, die zum Lagern und automatisierten Fördern von einem oder mehreren Gegenständen geeignet sind. Die Auftragsbehälter 5 sind beliebige Behälter oder Transport- und Lagerhilfsmittel, die zur Aufnahme von Gegenständen geeignet sind und für weitere Lager- und Fördervorgänge geeignet sind, wie beispielsweise Schachteln, Kisten oder gleichwertiges.

Die Kommissionierstation 3 ist an eine erste Förderbahn 6 angeschlossen, über die Lagerbehälter 4 mit den zu kommissionierenden Gegenständen der Kommissionierstation 3 zugeführt werden. Weiters ist die Kommissionierstation 3 an eine zweite Förderbahn 7 angeschlossen, mit der nach Abschluss des Kommissioniervorgangs fertig kommissionierte Auftragsbehälter 5 aus dem Kommissioniersystem 1 abgefördert werden. Erste Förderbahn 6 und zweite Förderbahn 7 sind mit nicht dargestellten Lagern verbunden, in denen die Lagerbehälter 4 bzw. die fertiggestellten Auftragsbehälter 5 für die nachfolgende Bearbeitung gelagert werden können.

Im dargestellten Ausführungsbeispiel sind erste Förderbahn 6 und zweite Förderbahn 7 durch Rollenförderer gebildet, können jedoch auch durch sonstige geeignete Förderer gebildet sein, wie etwa Bandförderer, Riemenförderer, usw..

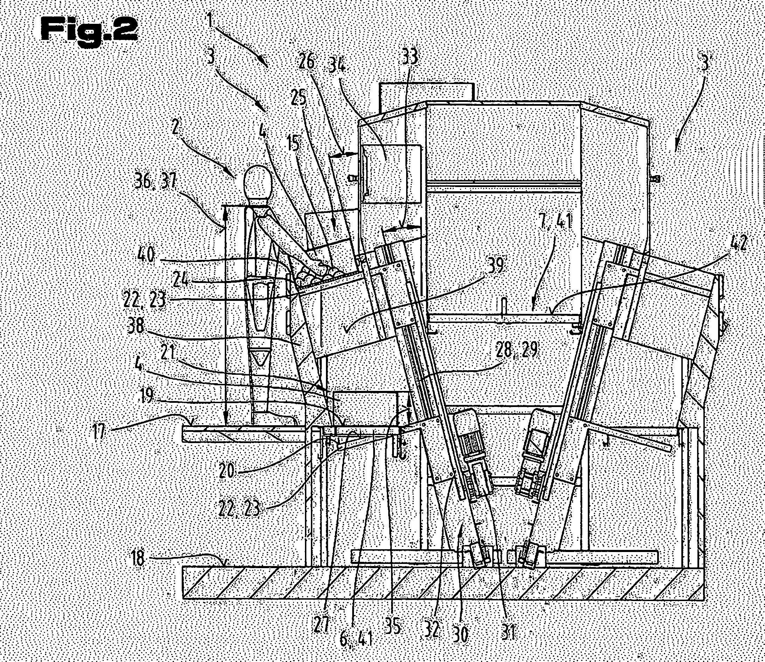

Für einen Kommissioniervorgang wird über die erste Förderbahn 6 ein Lagerbehälter 4 mit zu kommissionierenden Gegenständen zur Kommissionierstation 3 gefördert und in dieser durch ein in Fig. 1 nicht dargestelltes Lastaufnahmemittel von der ersten Förderbahn 6 aufgenommen und der Kommissionierperson 2 in einer ergonomisch günstigen Bereitstellungsposition angedient. Gemäß den vorliegenden Kommissionieraufträgen entnimmt die Kommissionierperson 2 dem bereitgestellten Lagerbehälter 4 die erforderlichen Gegenstände und füllt diese in die zur Befüllung mit diesen Gegenständen vorgesehenen Auftragsbehälter 5. Wie auch anhand von Fig. 2 beschrieben wird, befindet sich die erste Förderbahn 6 auf einem Niveau unterhalb der für die Kommissionierperson 2 ergonomisch günstigen Bereitstellungsposition, weshalb an der Kommissionierstation 3 ein Lagerbehälter 4 auf ein zweites höheres Niveau, das der entsprechenden Bereitstellungsposition entspricht, angehoben wird.

Damit das Entnehmen von Gegenständen aus dem bereitgestellten Lagerbehälter 4 für die Kommissionierperson 2 zusätzlich erleichtert wird, wird der jeweilige Lagerbehälter 4 der Kommissionierperson 2 in einer zu ihr hin geneigten Lage angedient, wobei ein Lagerbehälter 4 bereits bei der Bewegung in die Bereitstellungsposition diese geneigte Lage innehat. Da die Lagerbehälter 4 auf der ersten Förderbahn 6 in horizontaler Lage angefördert werden, erfolgt die erforderliche Kippbewegung bzw. Neigung des Lagerbehälters 4 zur Kommissionierperson 2 hin bei der Übernehmen eines auf der ersten Förderbahn 6 angeförderten Lagerbehälters 4 auf das Lastaufnahmemittel.

Ein für die Kommissionierung vorgesehener Lagerbehälter 4 wird demnach bereits in geneigter Lage in die Bereitstellungsposition verbracht, weshalb in der Bereitstellungsposition selbst keine Verstellung des Lagerbehälters 4 mehr erfolgen muss und dadurch im Nahbereich der Kommissionierperson 2 Lärmemissionen durch Kippbewegungen oder Kippvorgänge vermieden sind und weiters die Verletzungsgefahr durch Quetschen oder sonstige mechanische Einwirkungen durch eine Kippbewegung im Nahbereich der Kommissionierperson 2 ebenfalls vermieden sind.

Nachdem alle benötigten Gegenstände aus dem Lagerbehälter 4 in der Bereitstellungsposition entnommen wurden und auf die zugehörigen Auftragsbehälter 5 verteilt wurden, wird der fertige Lagerbehälter 4 in geneigter Lage mittels des Lastaufnahmemittels wieder aus der Bereitstellungsposition auf die erste Förderbahn 6 abgesenkt, wodurch wiederum für die Kommissionierperson 2 die Lärmbelastung und die Verletzungsgefahr deutlich reduziert sind.

Der Abtransport der fertig kommissionierten Auftragsbehälter 5 erfolgt indem diese auf die zweite Förderbahn 7 verbracht werden und mit dieser aus dem Kommissioniersystem 1 abtransportiert werden. Um diese Übergabe der fertigen Auftragsbehälter 5 an die zweite Förderbahn 7 einfach zu gestalten, ist die zweite Förderbahn 7 an die Stellplätze für die zu befüllenden Auftragsbehälter 5 angeschlossen, etwa indem die Stellplätze als Gleitflächen ausgeführt sind, von denen fertige Auftragsbehälter 5 manuell von der Kommissionierperson auf die zweite Förderbahn 7 abgeschoben werden oder es können die Stellplätze selbst als Förderer ausgeführt sein, die die fertigen Auftragsbehälter 5 an die zweite Förderbahn 7 transferieren.

Um die Arbeitsbelastung für die Kommissionierperson gering zu halten, ist die Bereitstellungsposition für Lagerbehälter 4 so positioniert, dass die Öffnung am Lagerbehälter 4, durch welche die Gegenstände entnommen werden, vorzugsweise zwischen Brust und Hüfthöhe angedient wird und die zu befüllenden Auftragsbehälter 5 auf einer Höhe bereitstehen, in der deren Öffnung, durch welche die Gegenstände eingefüllt werden, ebenfalls möglichst zwischen Brust- und Hüfthöhe liegt. Die Stellplätze für die Auftragsbehälter 5 als auch die Bereitstellungsposition können vorzugsweise auch an die Höhe der jeweiligen Behälter 4, 5 angepasst sein, damit für die Kommissionierperson 2 die jeweils maßgebliche Oberkante ergonomisch günstig zwischen Brusthöhe und Hüfthöhe liegt.

In Fig. 1 ist das Zufördern der Lagerbehälter zum Kommissioniersystem 1 durch einen Pfeil 8 an der ersten Förderbahn 6 und das Abfördern der fertig gestellten Auftragsbehälter 5 durch einen Pfeil 9 an der zweiten Förderbahn 7 angedeutet. Das Zufördern von leeren Auftragsbehältern 5 kann manuell oder ebenfalls mit Unterstützung von nicht dargestellten Förderern erfolgen. Ein Zwischenpuffern von leeren Auftragsbehältern 5 kann beispielsweise oberhalb der zu befüllenden Auftragsbehälter erfolgen, in dem für die relativ leichten, leeren Auftragsbehälter 5 eine entsprechende Abstellfläche 10 schräg oberhalb der in Arbeitshöhe angeordneten Auftragsbehälter 5 ausgebildet ist. Nach Abschluss eines Kommissioniervorganges werden abgefertigte und nicht mehr benötigte Lagerbehälter 4 von einem Lastaufnahmemittel in geneigter Lage wieder auf die erste Förderbahn 6 abgesenkt und wieder von dieser übernommen.

In Folge werden diese Lagerbehälter 4 in Richtung des Pfeils 8 auf der ersten Förderbahn 6 weiter zu einer Übergabestation 11 gefördert, an der sie durch einen in strichlierten Linien angedeuteten Übergabeförderer 12 von der ersten Förderbahn 6 übernommen und an die zweite Förderbahn 7 transferiert werden. Diese Übergabe von abgefertigten Lagerbehältern 4 erfolgt in Förderstromrichtung gesehen stromabwärts der Kommissionierstation 3 an der von dieser getrennten Übergabestation 11 und ist durch einen strichlierten Pfeil 13 angedeutet. Der weitere Abtransport der abgefertigten Lagerbehälter 4 erfolgt mittels der zweiten Förderbahn 7, die dadurch sowohl für den Abtransport von fertig gestellten Auftragsbehältern 5 als auch von abgefertigten Lagerbehältern 4 verwendet wird. Dadurch kann auch eine eigene Fördertechnik zum Abtransport abgefertigter Lagerbehälter 4 aus dem Kommissioniersystem 1 eingespart werden.

Das Lastaufnahmemittel, mit dem ein Lagerbehälter von der ersten Förderbahn 6 in die Bereitstellungsposition angehoben und anschließend wieder auf die erste Förderbahn 6 abgesenkt wird kann auch als Teil eines Bereitstellungsförderers angesehen werden, der zumindest das Lastaufnahmemittel, eine Führung, an der das Lastaufnahmemittel geführt ist sowie einen Antrieb für die Verstellbewegung des Lastaufnahmemittels umfasst. Da der Bereitstellungsförderer einen Ausschleusvorgang und einen Einschleusvorgang an der ersten Förderbahn durchführt, kann ein solcher auch als Ein- und Ausschleusförderer angesehen werden.

Bezogen auf die Lagerbehälter 4 ergibt sich damit innerhalb des Kommissioniersystems 1 folgender Verfahrensablauf:
◆ Die Lagerbehälter 4 werden mittels der ersten Förderbahn 6 zur Kommissionierstation 3 angefördert,
◆ in der Kommissionierstation 3 werden Lagerbehälter 4 von der ersten Förderbahn 6 aufgenommen in einer zur Kommissionierperson hin geneigten Lage in die Bereitstellungsposition angehoben,
◆ abgefertigte Lagerbehälter werden in geneigter Lage aus der Bereitstellungsposition wieder auf demselben Weg zur ersten Förderbahn 6 abgesenkt und an diese übergeben,
◆ mittels der ersten Förderbahn 6 werden Lagerbehälter 4 von der Kommissionier-station 3 abgefördert

Zusätzlich können daran folgende Schritte anschließen
◆ die Lagerbehälter werden auf der ersten Förderbahn zu einer von der Kommissionierstation 3 distanziert angeordneten Übergabestation 11 gefördert,
◆ mittels des Übergabeförderers 12 werden Lagerbehälter 4 von der ersten Förderbahn 6 an die zweite Förderbahn 7 transferiert,
◆ mittels der zweiten Förderbahn 7 werden Lagerbehälter 4 wieder aus dem Kommissioniersystem 1 abtransportiert.

Da die zu befüllenden Auftragsbehälter 5 etwa seitlich der Bereitstellungsposition angeordnet sind, ist es von Vorteil, wenn die erste Förderbahn 6 unterhalb der Stellplätze für die Auftragsbehälter 5 angeordnet ist und die Lagerbehälter 4 mittels eines geeigneten Lastaufnahmemittels in die Bereitstellungsposition angehoben werden. Dieses Anheben und Absenken von Lagerbehältern 4 in der Kommissionierstation 3 ist in Fig. 1 mittels eines strichlierten Pfeils 14 erkenntlich gemacht.

Damit auch in dem Zeitraum, der für den Wechsel eines abgefertigten Lagerbehälters 4 in der Bereitstellungsposition gegen einen nächsten Lagerbehälter 4 benötigt wird, die Kommissionierperson die Kommissioniervorgänge fortsetzen kann, ist es von Vorteil, wenn zumindest zwei Bereitstellungspositionen mit jeweils einem unabhängig voneinander arbeitenden Lastaufnahmemittel vorgesehen sind, an denen Lagerbehälter 4 angedient werden können. So kann während aus einem Lagerbehälter 4 kommissioniert wird der zweite abgefertigte Lagerbehälter 4 gegen einen neuen mit benötigten Gegenständen ausgetauscht werden. Dadurch entfallen Rüstzeiten für das Wechseln der Lagerbehälter 4 und die Pickleistung einer Kommissionierperson 2 wird durch Wartezeiten für den Behälterwechsel nicht beeinträchtigt.

Sowohl die Kommissionierstation 3 als auch die Übergabestation 11 sind, wie in Fig. 1 dargestellt, vorzugsweise mit Umhausungen ausgeführt, die insbesondere auch mit schalldämmenden Materialien ausgestattet sein können, damit die von den mechanischen Einwirkungen auf die zu fördernden Lagerbehälter 4 entstehenden Lärmemissionen sich nur in möglichst geringem Ausmaß zur Kommissionierperson 2 ausbreiten können. Im dargestellten Ausführungsbeispiel verbindet der Übergabeförderer 12 stirnseitige Enden der ersten Förderbahn 6 und der zweiten Förderbahn 7, es kann jedoch auch abweichend davon ein derartiger Übergabeförderer 12 auch im Verlauf innerhalb der ersten Förderbahn 6 bzw. der zweiten Förderbahn 7 angeordnet sein, etwa wenn beispielsweise mehrere derartige Kommissioniersysteme hintereinander an einer gemeinsamen, ersten Förderbahn 6 und einer gemeinsamen, zweiten Förderbahn 7 angeordnet sind.

Der von der Kommissionierperson 2 ausgeführte Kommissioniervorgang, bei dem Gegenstände 15 dem bereitgestellten Lagerbehälter 4 entnommen werden und in die bereitgestellten Auftragsbehälter 5 übergeben werden, ist in Fig. 1 durch Pfeile 16 angedeutet. Damit die Arbeitshöhe der Kommissionierperson 2 an die Höhe der Kommissionierstation angepasst ist, kann die Standfläche 17 der Kommissionierperson 2 gegenüber einer Grundfläche 18 beispielsweise durch ein Podest erhöht sein.

Fig. 2 zeigt einen Schnitt durch ein Kommissioniersystem 1 im Bereich der Kommissionierstation 3, aus dem die Höhenverhältnisse der Bauteile zueinander besser ersichtlich sind. Die Schnittdarstellung in Fig. 2 zeigt dabei eine Ausführung des Kommissioniersystems 1, bei dem an einer zentralen, gemeinsamen zweiten Förderbahn 7 vorzugsweise spiegelbildlich eine linke Kommissionierstation 3 und eine rechte Kommissionierstation 3' angeordnet sind, die weiteren Ausführungen betreffen jedoch sowohl einseitige als auch zweiseitige Ausführungen von derartigen Kommissionierstationen 3.

Die zu kommissionierenden Lagerbehälter 4 werden wie bereits anhand von Fig. 1 beschrieben, mittels der ersten Förderbahn 6 der Kommissionierstation 3 auf einer Förderebene 19 zugeführt, die im dargestellten Ausführungsbeispiel mit der Standfläche 17 für die Kommissionierperson 2 zusammenfällt, jedoch selbstverständlich auch davon abweichen kann. Diese Förderebene 19 kann auch als Förderniveau bezeichnet werden, da die Lagerbehälter auf dieser Höhe sowohl zur Kommissionierstation 3 angefördert als auch von dieser abgefördert werden. Weiters kann ein Lagerbehälter 4 auf der Förderebene 19 als in Förderposition 21 oder Übergabeposition bezeichnet werden.

Zum Anheben eines Lagerbehälters 4 von Förderebene 19 wird ein in einem ersten Niveau 20 unterhalb der Förderebene 19 positioniertes Lastaufnahmemittel 22 beispielsweise in Form einer Hubgabel 23 vom ersten Niveau 20 ausgehend angehoben und der Lagerbehälter 4 am Ende dieser Hubbewegung in einem zweiten Niveau 24 der Kommissionierperson 2 in einer Bereitstellungsposition 25 angedient.

Das zweite Niveau 24 bzw. die Bereitstellungsposition 25 ist dabei so gewählt, dass die Öffnung zum Entnehmen von Gegenständen 15, die beispielsweise durch die Oberkante des Lagerbehälters 4 gebildet ist, sich für die Kommissionierperson 2 ergonomisch günstig im Bereich zwischen Hüfthöhe und Schulterhöhe befindet, wodurch ein leichtes Entnehmen von Gegenständen 15 mit möglichst geringen Körperbewegungen gegeben ist.

Um die Entnahme von Gegenständen 15 weiter zu erleichtern, ist in der Bereitstellungsposition 25 der Lagerbehälter 4 um einen Winkel 26 in Richtung zur Kommissionierperson 2 hin geneigt, wodurch zusätzlich auch die optische Erfassung von enthaltenen Gegenständen 15 erleichtert wird. Damit die Kommissionierperson 2 durch den dazu erforderlichen Kippvorgang möglichst geringen zusätzlichen Lärmbelastungen und auch keinen zusätzlichen Verletzungsgefahren ausgesetzt wird, erfolgt dieses Kippen nicht im Nahbereich der Kommissionierperson 2 sondern bereits beim Aufnehmen eines Lagerbehälters 4 in der Förderposition 21 durch das Lastaufnahmemittel 22 und wird der Lagerbehälter 4 in bereits geneigter Lage vom ersten Niveau 20 bzw. der Förderebene 19 auf das zweite Niveau 24 angehoben.

Der Winkel 26 für die schräge Andienung eines Lagerbehälters 4 beträgt im dargestellten Ausführungsbeispiel ca. 15°, kann jedoch aus einem Bereich zwischen 5° und 30° gewählt sein. Die Wahl des Winkels 26 kann auch davon abhängig sein, welche Gegenstände zu kommissionieren sind und dass eine ausreichende Sicherheit gegen Abrutschen des schräg angedienten Lagerbehälters 4 vom Lastaufnahmemittel 22 gegeben ist.

Beim Bereitstellen eines Lagerbehälters 4 in der Kommissionierstation 3 wird dieser durch eine oder mehrere Aufnahmeflächen 27 am Lastaufnahmemittel 22 in schräger Lage gestützt.

Bei einem Lastaufnahmemittel 22 in Form einer Hubgabel 23 sind die Aufnahmeflächen 27 beispielsweise durch die Oberseiten der Zinken der Hubgabel 23 gebildet.

Im ersten Niveau 20 befindet sich die Aufnahmefläche 27 des Lastaufnahmemittels 22 unterhalb der Förderebene 19 bzw. der Förderposition 21 und wird ein Lagerbehälter 4 von der ersten Förderbahn 6 in die Kommissionierstation 3 gefördert, wenn die Aufnahmefläche 27 am Lastaufnahmemittel 22 unterhalb der Förderebene 19 bereitsteht.

Durch eine Ausführung des Lastaufnahmemittels 22 in Form einer Hubgabel 23 kann diese bei einer ersten Förderbahn 6 in Form eines Rollenförderers einfach zwischen den Fördenollen abgesenkt werden, wodurch die Aufnahmefläche 27 unter die Förderebene 19 verbracht werden kann und ein Lagerbehälter 4 in die Kommissionierstation 3 eingefahren werden kann Die Hubgabel 23 umfasst dabei zinken-ähnliche Aufnahmeelemente.

Anschließend erfolgt die Verstellung des Lastaufnahmemittels 22 in das zweite Niveau 24 in Form einer Hubbewegung, wobei das Lastaufnahmemittel 22 an einer Führung 28 translatorisch, also mit gleich bleibender Neigung des Lagerbehälters 4, geführt ist. Die Führung 28 ist im einfachsten Fall durch eine Linearführung 29 gebildet, die Führungsflächen aufweist, an denen das Lastaufnahmemittel 22 mittels geeigneten Führungselementen, beispielsweise Führungsrollen, geradlinig geführt ist. Das Lastaufnahmemittel 22 ist mit einem Verstellantrieb 30 verbunden, der im dargestellten Ausführungsbeispiel einen Antriebsmotor 31 umfasst, welcher beispielsweise über ein Zahnriementrieb 32 mit dem Lastaufnahmemittel 22 verbunden ist.

Im dargestellten Ausführungsbeispiel ist die Linearführung 29 um einen Winkel 33 gegenüber einer Vertikalen in Richtung zur Kommissionierperson 2 hin geneigt, wodurch bei der Bereitstellungsbewegung des Lagerbehälters 4 von der Förderposition 21 in die Bereitstellungsposition 25 sowohl eine Bewegung in vertikaler Richtung als auch in horizontaler Richtung bewirkt wird, und dadurch eine größere Fußfreiheit für die Kommissionierperson 2 möglich ist, als bei einer rein vertikalen Verstellung, bei der die erste Förderbahn 6 näher an den Füßen der Kommissionierperson 2 angeordnet sein müsste. Der Winkel 33 beträgt im dargestellten Ausführungsbeispiel ca. 15°, und entspricht damit dem Winkel 26 für die Schrägstellung der Lagerbehälter 4 während der Bereitstellung für das Kommissionieren. Grundsätzlich ist jedoch der Winkel 33 der Linearführung 29 gegenüber einer Vertikalen unabhängig von dem Winkel 26 der Behälterneigung. Durch die gleich große Ausführung der Winkel 26 und 33 kann jedoch das Lastaufnahmemittel 22 in Form der Hubgabel 23 rechtwinkelig zur Führung ausgebildet sein und dadurch auf vorhandene Hubförderer zurückgegriffen werden.

Der Verstellantrieb 30 für das Lastaufnahmemittel 22 ist an eine Steuerungsvorrichtung 34 der Kommissionierstation 3 angeschlossen bzw. mit dieser verbunden und kann diese insbesondere zur optimalen Anpassung der Bereitstellungsposition 25 an eine Kommissionierperson 2 dem Verstellantrieb 30 einen Wert für das zweite Niveau 24 vorgeben, wobei dieser Wert beispielsweise in Abhängigkeit von der Höhe 35 des zu kommissionierenden Lagerbehälters 4 berechnet wird und dadurch auch bei einer Abfolge von Lagerbehältern 4 mit unterschiedlichen Höhen 35 deren Oberkante trotzdem immer auf dieselbe Bereitstellungsposition 25 angehoben wird. Alternativ dazu wäre es auch denkbar, dass jeweils die Behälterunterseite auf dasselbe Niveau angehoben wird.

Da an einer derartigen Kommissionierstation 3 auch Kommissionierpersonen mit unterschiedlichen Körpergrößen tätig sein können, kann die Steuervorrichtung 34 weiters dazu verwendet werden, den Wert für das zweite Niveau in der Bereitstellungsposition 25 mit einer Körperabmessung 36 beispielsweise der Schulterhöhe 37 zu verknüpfen. So könnte beispielsweise mit Hilfe einer mit der Steuerungsvorrichtung 34 verbundenen Messeinrichtung, beispielsweise in Form einer Videokamera, eine Körperabmessung 36 vermessen werden und basierend darauf ein optimaler Wert für den Verstellantrieb 30 errechnet werden wodurch die Bereitstellungsposition 25 für die Kommissiönierperson optimal angepasst werden kann.

Alternativ wäre es auch möglich, dass für verschiedene Kommissionierpersonen 2 jeweils optimale Werte oder persönliche Präferenzen in der Steuerungsvorrichtung 34 hinterlegt sind, die nach Eingabe der Identität der aktuell tätigen Kommissionierperson 2 abgerufen werden.

Selbstverständlich kann die Steuerungsvorrichtung 34 auch gleichzeitig die Höhe 35 der Lagerbehälter 34 und die jeweilige Körperabmessung 36 oder einen hinterlegten Wert gemeinsam zur Ermittlung des optimalen zweiten Niveaus 24 heranziehen.

Damit für die Kommissionierperson 2 die Verletzungsgefahr beim Arbeiten an der Kommissionierstation 3 weiter reduziert ist, ist der Bewegungsraum, der für die Bewegung des Lastaufnahmemittels 22 und eines darauf geförderten Lagerbehälters 4 erforderlich ist, in Richtung zur Kommissionierperson 2 mittels einer Schachtwand 38 begrenzt. Diese reduziert die Gefahr, dass Körperteile der Kommissionierperson 2 in die Bewegungsbahn der an der Kommissionierstation 3 bereitgestellten Lagerbehälter 4 geraten und der Gefahr von Stößen ausgesetzt sind.

Die Bewegungsbahn zum Anheben und Absenken der Lagerbehälter 4 kann darüber hinaus auch zumindest im oberen Bereich seitlich von zusätzlichen Schachtwände 39 umgeben sein, wodurch quasi ein Schacht für die Hubbewegung eines Lagerbehälters 4 gebildet ist. Die seitlichen Schachtwände 39 sowie die vordere Schachtwand 38 können dazu insbesondere parallel zur Linearführung 29 verlaufen, wodurch ein konstanter Querschnitt des Schachtes gegeben ist, und ein derart gebildeter Schacht eine zusätzliche Sicherheit vor einem möglichen Abrutschen eines Behälters 4 von den schrägen Aufnahmeflächen 27 des Lastaufnahmemittels 22 gegeben ist.

Im normalen Kommissionierbetrieb kann das zweite Niveau 24 so festgelegt sein, dass dieses keinesfalls oberhalb der Oberkante 40 der vorderen Schachtwand 38 zu liegen kommt, d.h. die Unterkante eines Lagerbehälters 4 wird nicht so weit angehoben, dass sie oberhalb der Schachtwände 38, 39 zu liegen kommt. Dadurch ist im normalen Kommissionierbetrieb ein Einquetschen von Körperteilen der Kommissionierperson 2 beim Absenken eines Lagerbehälters 4 aus der Bereitstellungsposition 25 vermieden.

Darüber hinaus ist es auch möglich, dass der Schacht vier Schachtwände aufweist und der Lagerbehälter 4 bei der Bewegung zwischen dem ersten Niveau 20 und zweiten Niveau 24 von den Schachtwänden auf vier Seiten umgeben ist.

Fig. 2 zeigt weiters die zweite Förderbahn 7, die in diesem Ausführungsbeispiel ebenso wie die erste Förderbahn 6 als Rollenförderer 41 ausgebildet ist und dessen Rollen jeweils die Förderebenen definieren. Im Ausführungsbeispiel gemäß Fig. 2 ist die Förderebene 42 der zweiten Förderbahn 7 in Form des Rollenförderers 41 auf einem höheren Niveau als die Förderebene 20 der ersten Förderbahn 6. Die Förderebene 42 ist vorteilhaft so gewählt, dass fertig kommissionierte Auftragsbehälter 5 im Wesentlichen in horizontaler Richtung von ihren Stellplätzen auf die zweite Förderbahn 7 verbracht werden können, wodurch eine Fördertechnik zum Transfer der fertiggestellten Auftragsbehälter 5 auf die zweite Förderbahn 7 entfallen kann oder zumindest baulich einfach gehalten werden kann.

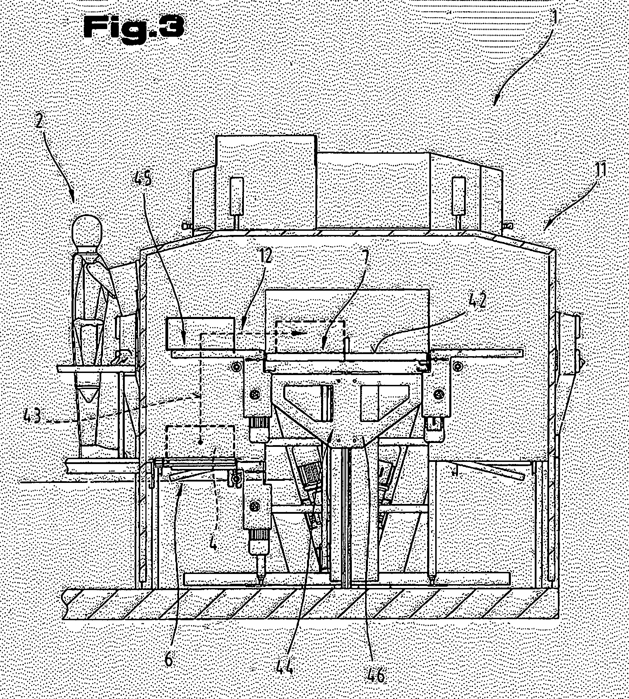

Fig. 3 zeigt einen weiteren Schnitt durch ein Kommissioniersystem 1 im Bereich der Übergabestation 11.

Die Übergabestation 11 verbindet, wie bereits anhand von Fig. 1 beschrieben, die erste Förderbahn 6 mit der zweiten Förderbahn 7 und umfasst einen Übergabeförderer 12, der abgefertigte Lagerbehälter 4 von der ersten Förderbahn 6 aufnimmt und an die zweite Förderbahn 7 abgibt. Wie mit dem strichlierten Pfeil 43 angedeutet ist, umfasst diese Übergabe eine Hubbewegung, in der ein Lagerbehälter 4 im Wesentlichen in vertikaler Richtung mit einem Lastaufnahmemittel 44 von der ersten Förderbahn 6 übernommen und vertikal nach oben angehoben wird und eine anschließende horizontale Bewegung, in der der angehobene Lagerbehälter 4 in horizontaler Richtung auf die zweite Förderbahn 7 transferiert wird. Das Lastaufnahmemittel 44 kann dazu wiederum in Form einer Hubgabel ausgebildet sein, und zusätzlich zum Horizontaltransfer eines Lagerbehälters 4 mit auf den Hubgabeln angeordneten Förderer 45 versehen sein.

Die Fig. 3 zeigt eine Ausführungsform des Übergabeförderers 12, bei dem an einer gemeinsamen Hubeinheit 46 zumindest ein Lastaufnahmemittel 44 zum Übernehmen von Lagerbehältern 4, von einer oder von zwei bezüglich der gemeinsamen zweiten Förderbahn 7 spiegelbildlich angeordneten ersten Förderbahnen 6 vorgesehen sind.

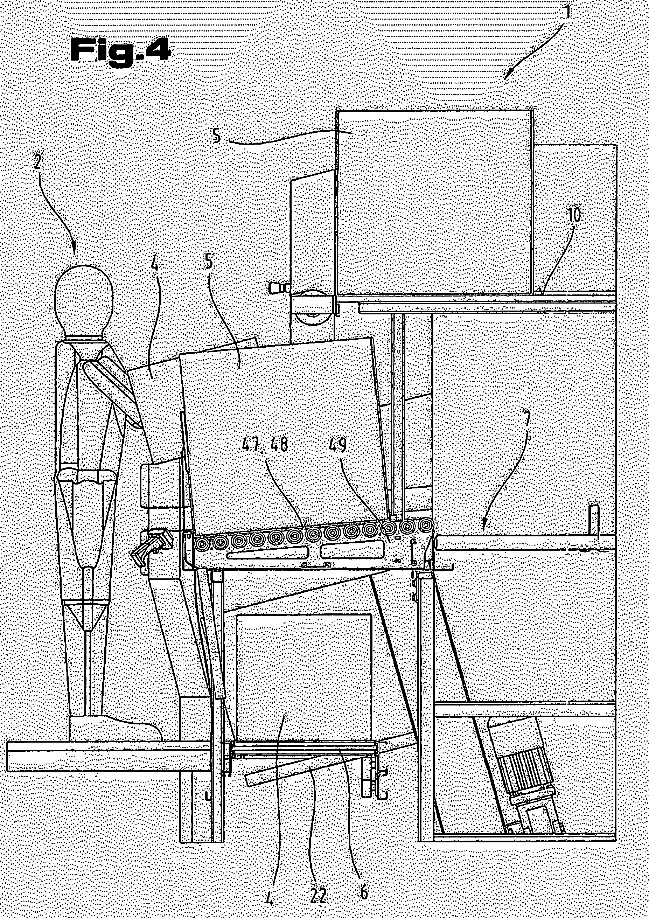

Fig. 4 zeigt eine Schnittdarstellung durch ein Kommissioniersystem 1 im Bereich der für die Kommissioniervorgänge bereitstehenden Auftragsbehälter 5, die, wie in Fig. 1 dargestellt, vorzugsweise links und rechts der Bereitstellungsposition 25 bereitstehen. Für die Auftragsbehälter 5 sind dazu Stellplätze 47 vorgesehen, die im Ausführungsbeispiel gemäß Fig. 4 zur Kommissionierperson 2 hin geneigte Stützebenen 48 aufweisen. Die Stützebenen 48 können durch einfache Gleitflächen gebildet sein, auf denen die zum Kommissionieren vorgesehenen Auftragsbehälter 5 abgestellt werden und nach Abschluss eines Kommissioniervorganges von der Kommissionierperson 2 auf die zweite Förderbahn 7 geschoben werden. Im Fall von schweren Auftragsbehältern 5, beispielsweise in Form von Paletten, können die Stellplätze 47 als manuell oder motorisch antreibbare Förderer 49 ausgebildet sein bzw. durch solche an die zweite Förderbahn 7 angeschlossen sein.

Fig. 4 zeigt weiters zusätzliche, leere Auftragsbehälter 5, die schräg oberhalb der Stellplätze 47 auf der Abstellfläche 10 bereitgehalten werden.

Fig. 5 zeigt eine alternative Ausführungsform eines Lastaufnahmemittels 22, wie es für eine Kommissionierstation 3 oder aber auch für andere Anwendungen zum Einsatz kommen kann. Das etwa L-förmige Lastaufnahmemittel 22 umfasst an einem Schenkel Führungselemente, beispielsweise in Form von Führungsrollen, mit denen das Lastaufnahmemittel 22 an einer nicht dargestellten Führung verstellbar gelagert ist und weist auf dem für das Aufnehmen von Behältern vorgesehenen zweiten Schenkel zusätzlich eine automatisierte Fördervorrichtung 51 auf, welche eine Auflagefläche 27 für Lagerbehälter 4 oder sonstige Behälter bzw. Fördereinheiten ausbildet und mit der beispielsweise ein Lagerbehälter 4 zwischen dem Lastaufnahmemittel 22 und einer strichliert dargestellten zweiten Förderbahn 7 transportierbar ist. Die Aufnahmefläche 27 kann dabei, wie in Fig. 5 dargestellt und anhand von Fig. 2 beschrieben zur Kommissionierperson 2 hin geneigt sein, es kann jedoch die Auflagefläche 27 auch horizontal ausgeführt sein oder sogar von der Kommissionierperson 2 weg geneigt, insbesondere für den Fall, dass das Kommissioniersystem 1 für kleine Lagerbehälter 4 eingesetzt wird, bei denen eine Bereitstellung von Lagerbehältern 4 in geneigter Lage ergonomisch nicht erforderlich ist.

In Fig. 5 ist die Verstellrichtung 52 des Lastaufnahmemittels 22 mit einem Doppelpfeil dargestellt und die durch die automatisierte Fördervorrichtung 51 bewirkte zusätzlich mögliche Förderrichtung 53 ebenfalls durch einen Doppelpfeil dargestellt. Im dargestellten Ausführungsbeispiel ist die Fördervorrichtung 51 in Form von Riemenförderern 54 ausgebildet, wobei die Oberseite der Förderriemen die Aufnahmefläche 27 bildet. Der Antriebsmotor 55 wird selbstverständlich ebenfalls von einer Steuerungsvorrichtung 34 angesteuert und der Verstellantrieb für das Lastaufnahmemittel 22 in Fig. 5 entspricht im Wesentlichen jenem, der bereits anhand von Fig. 2 beschrieben wurde.

Die Fördervorrichtung 51 umfasst zumindest ein Förderorgan 56, hier in Form von Riemen, mit dem ein am Lastaufnahmemittel 22 aufgenommener Lagerbehälter 4 in einer von der Verstellrichtung 52 des Lastaufnahmemittels 22 verschiedenen Förderrichtung 53 bewegbar ist. Ein derartiges Lastaufnahmemittel 22 ermöglicht es, sowohl in der abgesenkten als auch in der angehobenen Stellung Behälter oder sonstige Fördereinheiten quer zur Hubrichtung von benachbarten Förderbahnen zu übernehmen oder an diese zu übergeben, wodurch ein derartiges Lastaufnahmemittel sehr flexibel einsetzbar ist.

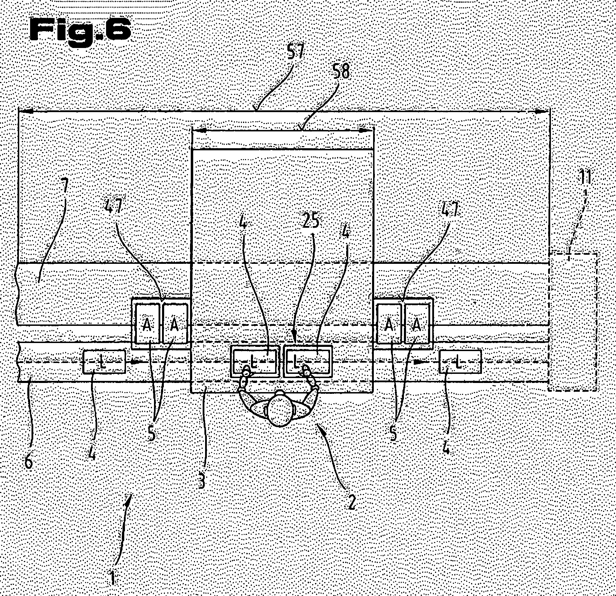

Fig. 6 zeigt noch eine stark vereinfachte Skizze eines Kommissioniersystems 1 mit einer Kommissionierstation 3 an der eine Kommissionierperson 2 aus einem in einer Bereitstellungsposition 25 angedienten Lagerbehälter 4 Gegenstände gemäß vorliegenden Kommissionieraufträgen entnimmt und in auf Stellplätzen 47 bereitgestellte Auftragsbehälter 5 transferiert. In der Kommissionierstation 3 ist ein in dieser Figur nicht dargestelltes Lastaufnahmemittel 22 (siehe Fig. 2) umfasst, das auf einem ersten Niveau einen Lagerbehälter 4 von der ersten Förderbahn 6 übernimmt und auf dem zweiten Niveau in einer Bereitstellungsposition 25 für die Kommissionierperson 2 andient.

Das Lastaufnahmemittel 22 führt oder stützt zwischen dem ersten Niveau 19 und dem zweiten Niveau 24 den Lagerbehälter 4 mit einer Aufnahmefläche. Wenn das Lastaufnahmemittel 22 auf das untere erste Niveau 19 verstellt ist befindet sich die Aufnahmefläche unterhalb einer Förderebene 20 der ersten Förderbahn 6 und kann in dieser Stellung ein Lagerbehälter über das Lastaufnahmemittel positioniert werden. Alternativ dazu kann ein geeignetes Lastaufnahmemittel auch in einer horizontalen Bewegung den in Förderposition bereitstehenden Lagerbehälter 4 unterfahren und anschließend anheben.

Mit der ersten Förderbahn 6 erfolgt zumindest der Antransport der zu kommissionierenden Lagerbehälter 4 und mit einer zweiten Förderbahn 7 werden zumindest fertig gestellte Auftragsbehälter 5 von der Kommissionierstation 3 abgefördert. Eine vorteilhafte Ausführungsform eines Kommissioniersystems 1 ist dadurch gegeben, dass sich wie in Fig. 6 dargestellt sowohl die erste Förderbahn 6 als auch die zweite Förderbahn 7 durch die Kommissionierstation 3 hindurch erstreckt. Dabei ist die Länge 57 der ersten Förderbahn 6 und der zweiten Förderbahn 7 größer als die doppelte Länge 58 der Kommissionierstation 3 in Förderrichtung. Es ist weiters jedoch auch möglich, dass nur die erste Förderbahn 6 oder die zweite Förderbahn 7 eine Länge 57 aufweist, die zumindest dem doppelten der Länge 58 der Kommissionierstation 3 entspricht.

In Fig. 6 dient der bezogen auf die Kommissionierstation 3 links angeordnete erste Förderabschnitt der ersten Förderbahn 6 dem Antransport der Lagerbehälter 4 und der bezogen auf die Kommissionierstation 3 rechte Abschnitt der ersten Förderbahn 6 dem Abtransport der Lagerbehälter 4 von der Kommissionierstation 3. Dies bedeutet eine erhebliche Reduzierung der Baugröße eines derartigen Kommissioniersystems 1 gegenüber aus dem Stand der Technik bekannten Kommissioniersystemen, bei denen zum Antransport der Lagerbehälter 4 und zum Abtransport der Lagerbehälter 4 getrennte Förderbahnen mit distanzierten Positionen für das Aufnehmen von Lagerbehältern 4 mit einem Lastaufnahmemittel und das nachfolgende Abgeben von einem Lastaufnahmemittel vorgesehen sind.

Vorzugsweise werden der erste Förderabschnitt, in Fig. 6 der linke Ast der ersten Förderbahn 6, und der zweite Förderabschnitt, in Fig. 6 der rechte Ast der ersten Förderbahn 6, mit gleicher Förderrichtung der Lagerbehälter 4 betrieben, wobei der Förderfluss der Lagerbehälter 4 jedoch auch bei Bedarf geändert werden kann.

Entsprechend der Länge der ersten Förderbahn 6 und/oder der zweiten Förderbahn 7 kann dadurch die Anzahl der in Förderrichtung der Lagerbehälter 4 hintereinander angeordneten Kommissionierstationen 3 variiert werden. An einer ersten Förderbahn 6 entsprechender Länge können dadurch entlang dieser mehrere Kommissionierstationen 3 angeordnet werden. Bei einer derartigen seriellen Anordnung von Kommissioniersystemen ist es von Vorteil, wenn an oder zwischen den einzelnen Kommissionierstationen 3 Möglichkeiten geschaffen sind, einzelne bei nachfolgenden Kommissionierstationen 3 dringend benötigte Lagerbehälter 4 an bereits im Kommissioniersystem 1 befindlichen Lagerbehältern 4 vorbeischleusen zu können. Dies kann so realisiert sein, dass die erste Förderbahn 6 alle seriell angeordneten Kommissionierstationen 3 durchläuft und an den einzelnen Kommissionierstationen 3 Ausschleusvorrichtungen und Pufferstationen für die an dieser speziellen Kommissionierstation 3 zu bearbeitenden Lagerbehälter 4 vorgesehen sind.

Bei einer parallelen Anordnung von zwei erfindungsgemäßen Kommissioniersystemen 1 ist es weiters möglich, dass von einer Kommissionierperson 2 zwei einander zugewandte und gegenüberliegende Kommissionierstationen 3 im Wechsel bedient werden, was bei einem geringeren Anfall von Kommissionieraufträgen möglich ist.

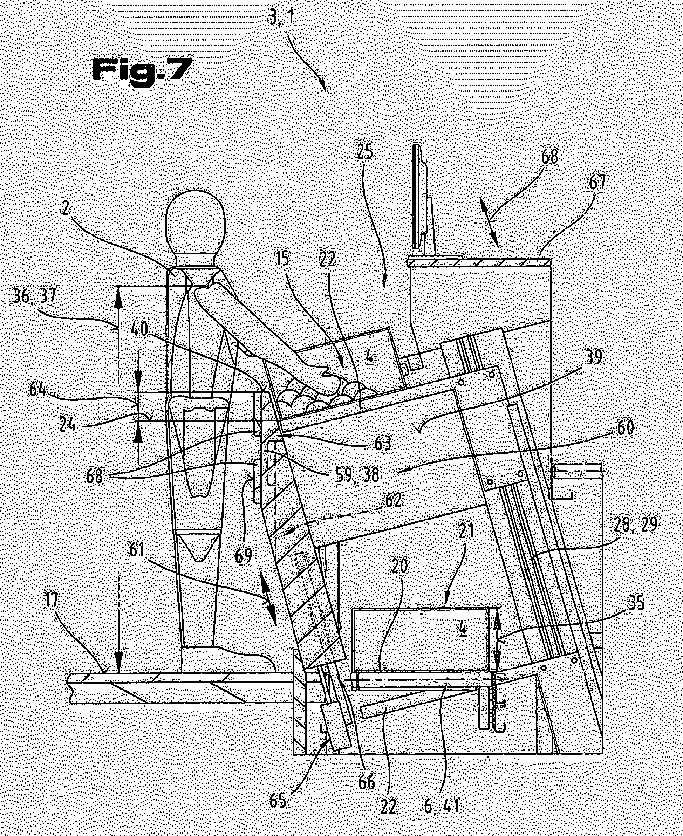

Fig. 7 zeigt einen Schnitt durch eine Kommissionierstation 3, die Bestandteil eines Kommissioniersystems 1 ist und an der eine Kommissionierperson 2 gemäß vorliegenden Kommissinieraufträgen aus Lagerbehältern 4 Gegenstände 15 entnimmt und auf in Fig. 7 nicht dargestellte Auftragsbehälter 5 verteilt. Die Lagerbehälter 4 werden dazu mittels einer ersten Förderbahn 6, hier in Form eines Rollenförderers 41, zur Kommissionierstation 3 gefördert und aus einer Förderposition 21 von einem ersten Niveau 20 mittels eines Lastaufnahmemittels 22 übernommen und in eine Bereitstellungsposition 25 auf einem zweiten Niveau 24 angehoben.

Dieses zweite Niveau 24 ist dabei vorteilhafterweise so festgelegt, dass für eine Kommissionierperson 2 mit einer bestimmten Körperabmessung 36, beispielsweise der Schulterhöhe 37, eine ergonomisch günstige Andienung der Lagerbehälter 4 in der Bereitstellungsposition 25 gegeben ist. Insbesondere kann ein Lagerbehälter 4, wie anhand der Ausführung gemäß Fig. 2 beschrieben, in einer zur Kommissionierperson 2 hin geneigten Lage in die Bereitstellungsposition 25 auf das zweite Niveau 24 verstellt werden. Das zweite Niveau 24 ist im Allgemeinen so gewählt, dass dieses zwischen Hüfthöhe und Brusthöhe der Kommissionierperson 2 liegt, wobei durch unterschiedliche Höhen 35 der Lagerbehälter 4 sich der optimale Wert für das zweite Niveau 24 verändern kann.

Die Verstellung des Lastaufnahmemittels 22 zwischen dem ersten Niveau 20 und dem zweiten Niveau 24 erfolgt, indem dieses an einer Führung 28, beispielsweise in Form einer Linearführung 29 geführt ist und mit einem in Fig. 7 nicht dargestellten Verstellantrieb 30 (siehe Fig. 2) verbunden ist.

Zwischen dem Bewegungsraum, den das Lastaufnahmemittel 22 und ein gegebenenfalls darauf positionierter Lagerbehälter 4 bei der Hub- und Absenkbewegung zwischen dem ersten Niveau 20 und dem zweiten Niveau 24 überstreicht und der Kommissionierperson 2 ist auf der, der Kommissionierperson 2 zugewandten Seite der Kommissionierstation 3 ein Wandelement 59 angeordnet, das verhindert, dass Körperteile der Kommissionierperson 2 in diesen Bewegungsraum ragen können und dadurch der Gefahr von Stößen oder ähnlichem ausgesetzt sind.

Dieser Wandteil 59 kann auch Teil eines Schachtes 60 sein, durch den ein Lagerbehälter 4 mittels des Lastaufnahmemittels 22 zwischen dem ersten Niveau 20 und dem zweiten Niveau 24 hindurchbewegt wird und somit der anhand von Fig. 2 beschriebenen, vorderen Schachtwand 38 entsprechen. Dieser Schacht 60 bietet durch seine vordere Schachtwand 38, hier in Form des Wandteils 59 einen Schutz vor Verletzungen der Kommissionierperson 2 als auch zusammen mit seitlichen Schachtwänden 39 gewissermaßen eine Führung für anzuhebende und abzusenkende Lagerbehälter 4.

In der in Fig. 7 dargestellten Kommissionierstation 3 ist der Wandteil 59 höhenverstellbar ausgeführt, wobei diese Verstellmöglichkeit durch Pfeil 61 angedeutet ist. Der Wandteil 59 kann dadurch ausgehend von einer strichliert angedeuteten Grundposition 62 in eine mit Volllinien dargestellte Arbeitsposition 63 angehoben werden. Durch diese Höhenverstellbarkeit, kann auch die Oberkante 40 des Wandteils 59 seine Höhenposition verändern, wobei diese vorteilhafterweise im normalen Kommissionierbetrieb immer so gewählt ist, dass diese zumindest auf dem zweiten Niveau 24 liegt oder um einen Höhenbetrag 64 darüber positioniert ist. Dadurch ist sichergestellt, dass die Oberkante 40 im normalen Kommissionierbetrieb immer oberhalb der Unterkante eines in der Bereitstellungsposition 25 befindlichen Lagerbehälters 4 gelegen ist und dadurch zwischen dem Wandteil 59 und dem Lagerbehälter 4 keine Quetschstelle entstehen kann.

Der Höhenbetrag 64 kann beispielsweise ein fixer Betrag von mehreren Zentimetern sein oder aber auch in Abhängigkeit von der Behälterhöhe 35 und/oder einer Körperabmessung 36 der Kommissionierperson 2 festgelegt werden. So kann etwa die Oberkante 40 jeweils auch so positioniert sein, dass sie immer knapp unterhalb der Oberkante eines Lagerbehälters 4 in der Bereitstellungsposition 25 positioniert ist.

Die Höhenverstellung des Wandteils 59 kann manuell durch die Kommissionierperson 2 erfolgen, von Vorteil ist jedoch wenn der Wandteil 59 mit einem automatisierten Verstellantrieb 65, etwa mit einem Servomotor, gekoppelt oder verbunden ist, der insbesondere auch von einer in Fig. 7 nicht dargestellten Steuervorrichtung 34 angesteuert ist.

Die Verstellbewegung des Wandteils 59 ist durch eine Führung 66, beispielsweise einer Linearführung, festgelegt, wobei diese vorteilhafterweise etwa parallel verlaufend zur Führung 28 des Lastaufnahmemittels 22 angeordnet ist, wodurch bei der Verstellung des Lagerbehälters 4 zwischen ersten Niveau 20 und zweiten Niveau 24 und dem Wandteil 59, der auch die vordere Schachtwand 38 bilden kann, ein konstanter Abstand gegeben ist.

Der Schacht 60 kann so ausgebildet sein, dass nur die vordere Schachtwand 38 in Form des Wandteils 59 höhenverstellbar ist, es ist jedoch auch möglich, dass die seitlichen Schachtwände 39 des Schachtes 60 ebenfalls zusammen mit dem Wandelement 59 höhenverstellbar sind.

Der Verstellantrieb 65 ist vorteilhafterweise mechanisch unabhängig von dem Verstellantrieb 30 für das Lastaufnahmemittel 22, wodurch der Wandteil 59 rechtzeitig in die richtige Höhenposition verstellt werden kann, bevor mit dem Lastaufnahmemittel 22 ein Lagerbehälter 4 auf das zweite Niveau 24 in die Bereitstellungsposition 25 angehoben wird.

Eine weitere Möglichkeit die Kommissionierstation 3 an eine Kommissionierperson ergonomisch optimal anpassbar zu machen, besteht darin, dass die Kommissionierstation 3 ferner eine verstellbare Ablage 67 umfasst, wobei deren Höhenverstellbarkeit durch einen Pfeil 68 angedeutet ist. Die Ablage 67 kann beispielsweise zur Anordnung von Benutzerschnittstellen, Druckern, Monitoren oder ähnlichem vorgesehen sein und kann durch die Höhenverstellbarkeit auch optimal ah Körperabmessungen 36 der Kommissionierperson 2 angepasst werden. Dabei ist es möglich, dass die Ablage 67 zusammen mit dem Wandteil 59 verstellt wird und mit diesem beispielsweise über die seitlichen Schachtwände 39 verbunden ist, wodurch ein eigener Verstellantrieb für die Ablage 67 entfallen kann.

In Fig. 7 ist für die Verstellbarkeit des Wandteils 59 und der Ablage 67 eine zur Kommissionierperson 2 hin geneigte Verstellrichtung dargestellt, es kann jedoch auch eine etwa vertikale Verstellbarkeit eines dieser oder beider Elemente realisiert sein. Zusätzlich oder alternativ kann die Ablage 67 mittels einer geeigneten Führung auch in horizontaler Richtung verstellbar sein.

Eine weitere Arbeitserleichterung für die Kommissionierperson 2 kann dadurch erzielt werden, dass der Wandteil 59 zumindest ein flächiges Stützelement 68 zum Abstützen der Kommissionierperson 2 während des Kommissioniervorganges umfasst, an dem sich diese anlehnen kann, falls sie sich über die Bereitstellungsposition 25 oder in Richtung zur Ablage 67 vorbeugen muss. Dies kann insbesondere notwendig sein, wenn die Lagerbehälter 4 größere Abmessungen besitzen. Durch die flächige Ausführung der Stützelemente 68 sind schmerzhafte Druckstellen für die Kommissionierperson 2 beim Anlehnen vermieden, wobei die Stützelemente 68 vorzugsweise etwa vertikale Stützflächen 69 aufweisen. Die Stützelemente 68 können insbesondere aus nicht-metallischen Werkstoffen wie Holz oder Kunststoff gebildet sein, wodurch die Kommissionierperson 2 beim Anlehnen kein Kältegefühl wie beim Berühren von Metall empfindet.

Auf für die Erfindung nicht wesentliche Details und Bauelemente wie z.B. Gestelle oder Verbindungselemente zwischen den einzelnen beschriebenen Bauelementen wird in dieser Anmeldung nicht näher eingegangen, da diese im Können des Durchschnittsfachmannes liegen.

Die Ausführungsbeispiele zeigen mögliche Ausführungsvarianten einer Kommissionierstation bzw. eines Kommissioniersystems, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

In den Figuren sind zum Teil verschiedene und gegebenenfalls für sich eigenständige Ausführungsformen der Erfindung oder von Bestandteilen der Erfindung gezeigt, wobei für gleiche Teile jeweils gleiche Bezugszeichen bzw. Bauteilbezeichnungen verwendet werden. Um unnötige Wiederholungen zu vermeiden, wurde auf mehrfache detaillierte Beschreibungen verzichtet.

Der Ordnung halber sei abschließend darauf hingewiesen, dass zum besseren Verständnis des Aufbaus des Kommissioniersystems dieses bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1; 2; 3; 4; 5; 6; 7 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufstellung**

| | | | |
|---|---|---|---|
| 1 | Kommissioniersystem | | |
| 2 | Kommissionierperson | 36 | Körperabmessung |
| 3 | Kommissionierstation | 37 | Schulterhöhe |
| 4 | Lagerbehälter | 38 | Schachtwand |
| 5 | Auftragsbehälter | 39 | Schachtwand |
| | | 40 | Oberkante |
| 6 | erste Förderbahn | | |
| 7 | zweite Förderbahn | 41 | Rollenförderer |
| 8 | Pfeil | 42 | Förderebene |
| 9 | Pfeil | 43 | Pfeil |
| 10 | Abstellfläche | 44 | Lastaufnahmemittel |
| | | 45 | Förderer |
| 11 | Übergabestation | | |
| 12 | Übergabeförderer | 46 | Hubeinheit |
| 13 | Pfeil | 47 | Stellplatz |
| 14 | Pfeil | 48 | Stützebene |
| 15 | Gegenstand | 49 | Förderer |
| | | 50 | Führungselement |
| 16 | Pfeil | | |
| 17 | Standfläche | 51 | Fördervorrichtung |
| 18 | Grundfläche | 52 | Verstellrichtung |
| 19 | erstes Niveau | 53 | Förderrichtung |
| 20 | Förderebene | 54 | Riemenförderer |
| | | 55 | Antriebsmotor |
| 21 | Förderposition | | |
| 22 | Lastaufnahmittel | 56 | Förderorgan |
| 23 | Hubgabel | 57 | Länge |
| 24 | zweites Niveau | 58 | Länge |
| 25 | Bereitstellungsposition | 59 | Wandteil |
| | | 60 | Schacht |
| 26 | Winkel | | |
| 27 | Aufnahmefläche | 61 | Pfeil |
| 28 | Führung | 62 | Grundposition |
| 29 | Linearführung | 63 | arbeitsposition |
| 30 | Verstellantrieb | 64 | Höhenbetrag |
| | | 65 | Verstellantrieb |
| 31 | Antriebsmotor | | |
| 32 | Zahnriementrieb | 66 | Führung |
| 33 | Winkel | 67 | Ablage |
| 34 | Steuerungsvorrichtung | 68 | Stützeelement |
| 35 | Höhe | 69 | Stützfläche |

## Patentansprüche

1. Kommissioniersystem (1) mit
einer Kommissionierstation (3) zum Kommissionieren von Gegenständen (15) aus Lagerbehältern (4) in Auftragsbehälter (5) durch eine Kommissionierperson (2),
einer ersten Förderbahn (6) zum Transport von Lagerbehältern (4),
einer zweiten Förderbahn (7) zumindest zum Transport von Auftragsbehältern (5) und/oder Lagerbehälter (4),
wobei die Kommissionierstation (3) an die erste Förderbahn (6) zum Transport von Lagerbehältern (4) und an die zweite Förderbahn (7) zumindest zum Transport von Auftragsbehältern (5) und/oder Lagerbehältern (4) angeschlossen ist und ein zwischen einem ersten Niveau (20) und einem zweiten Niveau (24) verfahrbares Lastaufnahmemittel (22) aufweist, wobei auf S26, Z25-28 dem ersten Niveau (20) ein Lagerbehälter (4) vom Lastaufnahmemittel (22) von der ersten S28, Z19-22 Förderbahn (6) übernommen wird und auf dem zweiten Niveau (24) ein Lagerbehälter in einer Hereitstellungsposition (25) für die Kommissionierperson (2) angedient wird,
wobei das Lastaufnahmemittel (22) eine automatisierte Fördervorrichtung (51) aufweist, welche eine Aufnahmefläche (27) für einen Lagerbehälter (4) ausbildet und auf der ein Lagerbehälter (4) der Kommissionierperson (2) in der Bereitstellungsposition (25) andienbar ist, wenn das Lastaufnahmemittel (22) auf das zweite Niveau (24) verstellt ist, **dadurch gekennzeichnet, dass** die erste Förderbahn (6) zum Transport von Lagerbehältern (4) und zweite Förderbahn (7) zumindest zum Transport von Auftragsbehältern (5) und/oder Lagerbehältern (4) durch die Kommissionierstation (3) hindurch verlaufen, und übereinander angeordnet sind sowie in einer Querschnittsebene seitlich versetzt zueinander verlaufen,
sodass ein Lagerbehälter (4) mittels der Fördervorrichtung (51) derart zwischen dem Lastaufnahmemittel (22) und der zweiten Förderbahn (7) transportierbar ist, dass der Lagerbehälter (4) nach einem Kommissioniervorgang aus der Bereitstellungsposition (25) ohne Umsetzen auf eine weitere Fördervorrichtung vom Lastaufnahmemittel (22) direkt an die zweite Förderbahn (7) gefördert wird.

2. Kommissioniersystem (1) nach Anspruch 1, **dadurch gekennzeichnet, dass** die Fördervorrichtung (51) zumindest ein endlos umlaufendes Förderorgan (56) umfasst, welches die Aufnahmefläche (27) ausbildet.

3. Kommissioniersystem (1) nach Anspruch 1, **dadurch gekennzeichnet, dass** die Aufnahmefläche (27) den Lagerbehälter (4) zwischen dem ersten Niveau (20) und dem zweiten Niveau (24) in einer um einen Winkel (26) zur Kommissionierperson (2) hin geneigten Lage stützt.

4. Kommissioniersystem (1) nach Anspruch 3, **dadurch gekennzeichnet, dass** das Lastaufnahmemittel (22) an einer Führung (28) translatorisch, insbesondere geradlinig, zwischen dem ersten Niveau (20) und dem zweiten Niveau (24) verstellbar geführt ist.

5. Kommissioniersystem (1) nach Anspruch 4, **dadurch gekennzeichnet, dass** die Führung (28) gegenüber der Vertikalen um einen Winkel (33) mit einer unteren Grenze von 5° und einer oberen Grenze von 30°, vorzugsweise um einen Winkel von 15°, in Richtung zur Kommissionierperson (2) geneigt ist.

6. Kommissioniersystem (1) nach einem der Ansprüche 3 bis 5, **dadurch gekennzeichnet, dass** diese einen sich zwischen dem ersten Niveau (20) und dem zweiten Niveau (24) erstreckenden Schacht aufweist, innerhalb welchem der Lagerbehälter (4) am Lastaufnahmemittel (22) zwischen dem ersten Niveau (20) und dem zweiten Niveau (24) bewegt wird.

7. Kommissioniersystem (1) nach Anspruch 6, **dadurch gekennzeichnet, dass** der Schacht beidseits zum Lastaufnahmemittel (22) parallel verlaufende erste und zweite Schachtwände (39) und eine der Kommissionierperson (2) zugewandte dritte Schachtwand (38) aufweist, wobei die dritte Schachtwand (38) mit einem Spaltabstand zum Lastaufnahmemittel (22) parallel zu einem Führungsverlauf der Führung (28) verläuft.

8. Kommissioniersystem (1) nach Anspruch 6 oder 7, **dadurch gekennzeichnet, dass** die erste Schachtwand (39) und/oder zweite Schachtwand (39) und/oder dritte Schachtwand (38) an ihrer(n) Innenseite(n) eine Begrenzungsfläche(n) für den Lagerbehälter (4) ausbilden.

9. Kommissioniersystem (1) nach einem der Ansprüche 3 bis 8, **dadurch gekennzeichnet, dass** das Lastaufnahmemittel (22) im zweiten Niveau (24) in der Bereitstellungsposition (25) von schachtartigen, insbesondere parallel zur Führung (28) verlaufenden, Begrenzungswänden (39) umgeben ist, deren lichter Querschnitt die Bewegung der Lagerbehälter (4) zwischen dem ersten Niveau (20) und dem zweiten Niveau (24) zulässt, und die Aufnahmefläche (27) des Lastaufnahmemittels (22) im normalen Kommissionierbetrieb nicht über die Oberkante (40) der Begrenzungswände (39) oder des Trennwandelements (38) verstellt wird.

10. Kommissioniersystem (1) nach einem der Ansprüche 3 bis 9, **dadurch gekennzeichnet, dass** die erste Förderbahn (6) als Rollenförderer (41) ausgebildet ist und das Lastaufnahmemittel (22) in Form einer zwischen die Rollen des Rollenförderers (41) verstellbaren Hubgabel (23) ausgebildet ist.

11. Kommissioniersystem (1) nach einem der Ansprüche 3 bis 10, **dadurch gekennzeichnet, dass** benachbart zur Bereitstellungsposition (25), insbesondere aus Sicht der Kommissionierperson (2) beidseits dazu Stellplätze (47) für zu befüllende Auftragsbehälter (5) angeordnet sind, wobei die Stellplätze (47) vorzugsweise niedriger angeordnet sind, als die Oberkante eines Lagerbehälters (4) in Bereitstellungsposition (25).

12. Kommissioniersystem (1) nach Anspruch 11, **dadurch gekennzeichnet, dass** die Stellplätze (47) als Gleitflächen oder manuell oder motorisch antreibbare Förderer (49) ausgebildet sind oder durch solche an die zweite Förderbahn (7) angeschlossen sind.

13. Kommissioniersystem (1) nach einem der Ansprüche 3 bis 11, **dadurch gekennzeichnet, dass** zumindest zwei voneinander unabhängige und mit eigenen Verstellantrieben (30, 30') versehene Lastaufnahmemittel (22, 22') vorgesehen sind, wodurch Lagerbehälter (4) in zwei, insbesondere nebeneinander angeordneten Bereitstellungspositionen (25) angedient werden können.

14. Kommissioniersystem (1) nach einem der Ansprüche 3 bis 11, **dadurch gekennzeichnet, dass** eine Länge (57) der ersten Förderbahn (6) zum Transport von Lagerbehältern, (4) und/oder zweiten Förderbahn (7) zumindest zum Transport von Auftragsbehältern (5) zumindest der doppelten Länge einer Kommissionierstation (3) entspricht.

## Claims

1. Picking system (1) comprising
a picking station (3) for picking objects (15) from storage containers (4) into order containers (5) by a picking person (2),
a first conveyor track (6) for transporting storage containers (4),
a second conveyor track (7) at least for transporting order containers (5) and/or storage containers (4)
wherein the picking station (3) is connected to the first conveyor track (6) for transporting storage containers (4) and to the second conveyor track (7) at least for transporting order containers (5) and/or storage containers (4) and has a load receiving means (22) which is movable between a first level (20) and a second level (24), wherein on the first level (20) a storage container (4) is transferred from the first conveyor track (6) to the load receiving means (22) and on the second level (24) a storage container (4) is offered in a readiness position (25) for the picking person (2),
wherein the load receiving means (22) comprises an automated conveying device (51) which forms a receiving surface (27) for a storage container (4) and on which a storage container (4) can be offered to the picking person (2) in the readiness position (25) when the load receiving means (22) is moved onto the second level (24), **characterized in that** the first conveyor track (6) for transporting storage containers (4) and the second conveyor track (7) at least for transporting order containers (5) and/or storage containers (4) run through the picking station (3) and are disposed above one another and run laterally offset with respect to one another in a cross-sectional plane, so that a storage container (4) can be transported by means of the conveying device (51) in such a manner between the load receiving means (22) and the second conveyor track (7) that after a picking process the storage container (4) is conveyed from the readiness position (25) without transfer to a further conveying device by the load receiving means (22) directly to the second conveyor track (7).

2. The picking system (1) according to claim 1, **characterized in that** the conveying device (51) comprises at least one continuously circulating conveying element (56) which forms the receiving surface (27).

3. The picking system (1) according to claim 1, **characterized in that** receiving surface (27) supports the storage container (4) between the first level (20) and the second level (24) in a position which is inclined at an angle (26) with respect to the picking person (2).

4. The picking system (1) according to claim 3, **characterized in that** the load receiving means (22) is guided movably on a guide (28) translationally, in particular rectilinearly, between the first level (20) and the second level (24).

5. The picking system (1) according to claim 4, **characterized in that** the guide (28) is inclined with respect to the vertical by an angle (33) having a lower limit of 5° and an upper limit of 30°, preferably by an angle of 15°, in the direction of the picking person (2).

6. The picking system (1) according to any one of claims 3 to 5, **characterized in that** this has a shaft extending between the first level (20) and the second level (24) within which the storage container (4) is moved on the load receiving means (22) between the first level (20) and the second level (24).

7. The picking system (1) according to claim 6, **characterized in that** the shaft has first and second shaft walls (39) running parallel to the load receiving means (22) on both sides and a third shaft wall (38) facing the picking person (2), wherein the third shaft wall (38) runs parallel to a guide profile of the guide (28) with a gap distance from the load receiving means (22).

8. The picking system (1) according to claim 6 or 7, **characterized in that** the first shaft wall (39) and/or the second shaft wall (39) and/or the third shaft wall (38) form a boundary surface(s) for the storage container (4) on their inner side(s).

9. The picking system (1) according to any one of claims 3 to 8, **characterized in that** in the second level (24) in the readiness position (25) the load receiving means (22) is surrounded by shaft-like boundary walls (39) running in particular parallel to the guide (28), the inside cross-section of which allows the movement of the storage container (4) between the first level (20) and the second level (24) and the receiving surface (27) of the load receiving means (22) in normal picking operation is not moved over the upper edge (40) of the boundary walls (39) or the dividing wall element (38).

10. The picking system (1) according to any one of claims 3 to 9, **characterized in that** the first conveyor track (6) is configured as a roller conveyor (41) and the load receiving means (22) is configured in the form of a lifting fork (23) which can be moved between the rollers of the roller conveyor (41).

11. The picking system (1) according to any one of claims 3 to 10, **characterized in that** adjacent to the readiness position (25), in particular from the view of the picking person (2) on both sides thereof, parking places (47) are provided for order containers (5) to be filled, wherein the parking places (47) are preferably disposed lower than the upper edge of a storage container (4) in the readiness position (25).

12. The picking system (1) according to claim 11, **characterized in that** the parking places (47) are configured as sliding surfaces or manually or motor driven conveyors (49) or are connected by such to the second conveyor track (7).

13. The picking system (1) according to any one of claims 3 to 11, **characterized in that** at least two load receiving means (22, 22') which are independent of one another and provided with their own moving drives (30, 30') are provided, whereby storage containers (4) can be offered in two readiness positions (25) in particular disposed adjacent to one another.

14. The picking system (1) according to any one of claims 3 to 11, **characterized in that** a length (57) of the first conveyor track (6) for transporting storage containers (4) and/or the second conveyor track (7) at least for transporting order containers (5) corresponds to at least twice the length of a picking station (3).

## Revendications

1. Système de préparation de commande (1), comprenant
une station de préparation de commande (3) pour préparer une commande constituée d'articles (15) via un préparateur de commande (2) les transférant de conteneurs de stockage (4) jusque dans des conteneurs de commande (5),
un première piste de convoyeur (6) pour le transport de conteneurs de stockage (4), une seconde piste de convoyeur (7) au moins pour le transport de conteneurs de commande (5) et/ou de conteneurs de stockage (4),
dans lequel la station de préparation de commande (3) est reliée à la première piste de convoyeur (6) pour le transport de conteneurs de stockage (4) et à la deuxième piste de convoyeur (7) au moins pour le transport de conteneurs de commande (5) et/ou de conteneurs de stockage (4), et présente un moyen de réception de charge (22) mobile entre un premier niveau (20) et un second niveau (24), un conteneur de stockage (4) étant pris sur le premier niveau (20) à partir du moyen de réception de charge (22) de la première piste de convoyeur (6), et un conteneur de stockage (4) étant amené au deuxième niveau (24), dans une position de mise à disposition (25), pour le préparateur de commande (2),
le moyen de réception de charge (22) présentant un dispositif convoyeur automatisé (51) formant une surface de réception (27) pour un conteneur de stockage (4), et sur lequel un conteneur de stockage (4) peut être mis à la disposition du préparateur de commande (2) dans la position de mise à disposition (25) lorsque le moyen de réception de charge (22) est établi au second niveau (24), **caractérisé en ce que**
la première piste de convoyeur (6) pour le transport de conteneurs de stockage (4) et la seconde piste de convoyeur (7) au moins pour le transport de conteneurs de commande (5) et/ou de conteneurs de stockage (4) s'étendent à travers la station de préparation de commande (3) et sont disposées l'une au-dessus de l'autre, et s'étendant dans un plan en coupe transversale décalées latéralement l'une par rapport à l'autre,
de sorte qu'un conteneur de stockage (4), au moyen du dispositif convoyeur (51), peut être transporté entre le moyen de réception de charge (22) et la seconde piste de convoyeur (7), et que le conteneur de stockage (4) est acheminé directement au niveau de la seconde piste de convoyeur (7) à partir de la position de mise à disposition (25) après une opération de préparation de commande, sans transfert vers un autre dispositif convoyeur depuis le moyen de réception de charge (22).

2. Système de préparation de commande (1) selon la revendication 1, **caractérisé en ce que** le dispositif convoyeur (51) comprend au moins un élément de convoyeur tournant sans fin (56) formant la surface de réception (27).

3. Système de préparation de commande (1) selon la revendication 1, **caractérisé en ce que** la surface de réception (27) du conteneur de stockage (4), entre le premier niveau (20) et le second niveau (24), supporte dans position inclinée sur un angle (26) par rapport au préparateur de commande (2).

4. Système de préparation de commande (1) selon la revendication 3, **caractérisé en ce que** le moyen de réception de charge (22) est guidé de manière ajustable sur un guide (28) en translation, en particulier de façon linéaire, entre le premier niveau (20) et le second niveau (24).

5. Système de préparation de commande (1) selon la revendication 4, **caractérisé en ce que** le guide (28) est incliné par rapport à la verticale sur un angle (33) ayant une limite inférieure de 5° et une limite supérieure de 30°, de préférence sur un angle de 15°, dans la direction du préparateur de commande (2).

6. Système de préparation de commande (1) selon l'une quelconque des revendications 3 à 5, **caractérisé en ce que** celui-ci présente une cage s'étendant entre le premier niveau (20) et le second niveau (24), dans lequel le conteneur de stockage (4) est déplacé sur le moyen de réception de charge (22) entre le premier niveau (20) et le second niveau (24).

7. Système de préparation de commande (1) selon la revendication 6, **caractérisé en ce que** la cage présente des première et deuxième parois de cage (39) s'étendant parallèlement des deux côtés du moyen de réception de charge (22), et une troisième paroi de cage (38) faisant face au préparateur de commande (2), de sorte que la troisième paroi de cage (38) s'étend avec une distance d'écartement par rapport au moyen de réception de charge (22) parallèlement à un chemin de guidage du guide (28).

8. Système de préparation de commande (1) selon la revendication 6 ou 7, **caractérisé en ce que** la première paroi de cage (39) et/ou la deuxième paroi de cage (39) et/ou la troisième paroi de cage (38) forme(nt) sur leur(s) côté(s) intérieur(s) une ou des surfaces limites pour le conteneur de stockage (4).

9. Système de préparation de commande (1) selon l'une quelconque des revendications 3 à 8, **caractérisé en ce que** le moyen de réception de charge (22), dans le second niveau (24) et dans la position de mise à disposition (25), est entouré de parois de confinement (39) en forme de cage, s'étendant en particulier parallèlement au guide (28), dont la section transversale intérieure permet le déplacement du conteneur de stockage (4) entre le premier niveau (20) et le second niveau (24), et la surface de réception (27) du moyen de réception de charge (22), dans l'opération normale de préparation de commande, n'est pas ajustée au-dessus du bord supérieur (40) des parois de confinement (39) ou des éléments de paroi de séparation (38).

10. Système de préparation de commande (1) selon l'une quelconque des revendications 3 à 9, **caractérisé en ce que** la première piste de convoyeur (6) est conçue sous la forme d'un convoyeur à rouleaux (41), et le moyen de réception de charge (22) est réalisé sous la forme d'un chariot élévateur (23) pouvant être ajusté entre les rouleaux du convoyeur à rouleaux (41).

11. Système de préparation de commande (1) selon l'une quelconque des revendications 3 à 10, **caractérisé en ce qu'**à côté de la position de mise à disposition (25), en particulier du point de vue du préparateur de commande (2), des places de stationnement (47) sont disposées des deux côtés pour des conteneurs de commande (5) devant être remplis, dans lequel les places de stationnement (47) sont de préférence disposées plus bas que le bord supérieur d'un conteneur de stockage (4) dans la position de mise à disposition (25).

12. Système de préparation de commande (1) selon la revendication 11, **caractérisé en ce que** les places de stationnement (47) sont réalisées sous la forme de surfaces de glissement ou d'un convoyeur (49) entraîné par un moteur ou manuellement, ou sont reliées par l'intermédiaire d'un tel convoyeur à la seconde piste de convoyeur (7).

13. Système de préparation de commande (1) selon l'une quelconque des revendications 3 à 11, **caractérisé en ce qu'**au moins deux moyens de réception de charge (22, 22') indépendants les uns des autres et avec leur propre entraînement de réglage (30, 30') sont prévus, par l'intermédiaire desquels des conteneurs de stockage (4) peuvent être utilisés en deux positions de mise à disposition (25), en particulier adjacentes.

14. Système de préparation de commande (1) selon l'une quelconque des revendications 3 à 11, **caractérisé en ce qu'**une longueur (57) de la première piste de convoyeur (6) pour le transport de conteneurs de stockage (4) et/ou de la seconde piste de convoyeur (7) au moins pour le transport de conteneurs de commande (5) correspond au moins au double de la longueur d'une station de préparation de commande (3).
